# EUROPÄISCHE PATENTSCHRIFT

(11) **EP 0 842 975 B1**
(45) Veröffentlichungstag und Bekanntmachung des Hinweises auf die Patenterteilung: **22.05.2002**
(21) Anmeldenummer: 97810850.4
(22) Anmeldetag: 11.11.1997
(51) Int. Cl.: C08K 5/15

(54) **Stabilisierung von Polyolefinen in Dauerkontakt mit extrahierenden Medien**
Stabilising polyolefins for long term contact with an extracting medium
Stabilisation de masses à mouler à base de polyoléfines pour usage en milieu lessivant

(30) Priorität: 18.11.1996 CH 284496
(43) Veröffentlichungstag der Anmeldung: 20.05.1998
(73) Patentinhaber: Ciba Specialty Chemicals Holding Inc., 4057 Basel (CH)
(72) Erfinder: Kröhnke, Christoph, 79206 Breisach (DE); Fussenegger, Werner, 4132 Muttenz (CH)

(56) Entgegenhaltungen:
- DE-A- 19 728 214
- US-A- 5 274 072
- US-A- 5 516 920

## Beschreibung

Die vorliegende Erfindung betrifft Zusammensetzungen enthaltend ein Polyolefin, das im Dauerkontakt mit extrahierenden Medien steht und als Stabilisator mindestens eine Verbindung vom Typ der Benzofuran-2-one enthält. Die vorliegende Erfindung betrifft auch die Verwendung der Verbindungen vom Typ der Benzofuran-2-one zur Verbesserung der Beständigkeit von Polyolefinen und ein Verfahren zum Stabilisieren von Polyolefinen, die im Dauerkontakt mit extrahierenden Medien sind.

Aus R. Gächter und H. Müller, "Plastics Additives Handbook, 3rd Edition", Seiten 1 bis 100 (1990) ist beispielsweise bekannt, dass Polyolefine durch geeignete Stabilisatormischungen gegen oxidative Schädigung während der Herstellung, der Verarbeitung und des Gebrauchs geschützt werden können. In vielen Fällen stehen die stabilisierten Polyolefinformkörper während ihres Gebrauchs in Kontakt mit flüssigen oder gasförmigen Medien. Deshalb ist es erforderlich, dass die dem Polyolefinformkörper zugesetzten Stabilisatormischungen eine ausreichende chemische Resistenz gegen die jeweiligen Kontaktmedien besitzen. Besonders gefährdete Polyolefinformkörper sind beispielsweise Rohre, Seekabel, Tanks oder Geomembrane, welche im Dauerkontakt mit extrahierenden Medien sind.

EP-A-0 324 106 beschreibt eine Polyolefinformmasse, welche eine besonders gute Stabilität bei Dauerkontakt mit extrahierenden Medien besitzt. Als Stabilisatorgemisch wird ein symmetrisches Triarylphosphit und ein Ester der 3,3-Bis(3'-tert-butyl-4'-hydroxyphenyl)-butansäure verwendet.

Die Verwendung von Verbindungen vom Typ der Benzofuran-2-one als Stabilisatoren für organische Polymere ist beispielsweise aus U.S. 4,325,863; U.S. 4,388,244; U.S. 5,175,312; U.S. 5,252,643; U.S. 5,216,052; U.S. 5,369,159; U.S. 5,488,117; U.S. 5,356,966; U.S. 5,367,008; U.S. 5,428,162; U.S. 5,428,177 oder U.S. 5,516,920 bekannt.

EP-A-0 839 623 offenbart die Stabilisierung von durch Rotomolding erhaltene Polyolefin-Formkörper mit organischen Phosphiten und 3-Aryl-benzofuran-2-onen.

Es wurde nun gefunden, dass sich diese Verbindungen vom Typ der Benzofuran-2-one sich besonders gut als Stabilisatoren für Polyolefine eignen, die im Dauerkontakt mit extrahierenden Medien stehen.

Die vorliegende Erfindung betrifft daher Zusammensetzungen enthaltend
a) ein dickschichtiger Polyolefinformkörper, der im Dauerkontakt mit extrahierenden Medien steht, und
b) mindestens eine Verbindung vom Typ der Benzofuran-2-one; mit der Bedingung, dass die Komponente (a) keinen durch Rotomolding erhaltenen Polyolefinformkörper bedeutet.

Von Interesse sind Zusammensetzungen, worin die Komponente (b) eine Verbindung der Formel I

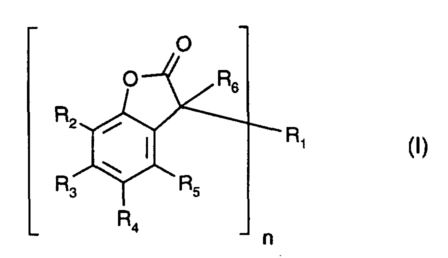

ist, worin, wenn n 1 ist,
R₁ unsubstituiertes oder mit C₁-C₄-Alkyl, C₁-C₄-Alkoxy, C₁-C₄-Alkylthio, Hydroxy, Halogen, Amino, C₁-C₄-Alkylamino, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]thienyl, Naphtho[2,3-b]thienyl, Thianthrenyl, Dibenzofuryl, Chromenyl, Xanthenyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phtalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl darstellt, oder R₁ einen Rest der Formel II 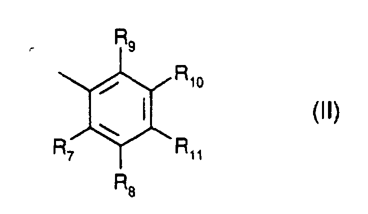 bedeutet, und
   wenn n 2 ist,
R₁ unsubstituiertes oder mit C₁-C₄-Alkyl oder Hydroxy substituiertes Phenylen oder Naphthylen; oder -R₁₂-X-R₁₃- darstellt,
R₂, R₃, R₄ und R₅ unabhängig voneinander Wasserstoff, Chlor, Hydroxy, C₁-C₂₅-Alkyl, C₇-C₉-Phenylalkyl, unsubstituiertes oder durch C₁-C₄-Alkyl substituiertes Phenyl; unsubstituiertes oder durch C₁-C₄-Alkyl substituiertes C₅-C₈-Cycloalkyl; C₁-C₁₈-Alkoxy, C₁-C₁₈-Alkylthio, C₁-C₄-Alkylamino, Di-(C₁-C₄-alkyl)amino, C₁-C₂₅-Alkanoyloxy, C₁-C₂₅-Alkanoylamino, C₃-C₂₅-Alkenoyloxy, durch Sauerstoff, Schwefel oder 〉N―R₁₄ unterbrochenes C₃-C₂₅-Alkanoyloxy; C₆-C₉-Cycloalkylcarbonyloxy, Benzoyloxy oder durch C₁-C₁₂-Alkyl substituiertes Benzoyloxy darstellen; oder ferner die Reste R₂ und R₃ oder die Reste R₃ und R₄ oder die Reste R₄ und R₅ zusammen mit den Kohlenstoffatomen, an die sie gebunden sind, einen Benzoring bilden, R₄ zusätzlich -(CH₂)ₚ-COR₁₅ oder -(CH₂)_{q}OH darstellt, oder wenn R₃, R₅ und R₆ Wasserstoff sind, R₄ zusätzlich einen Rest der Formel III 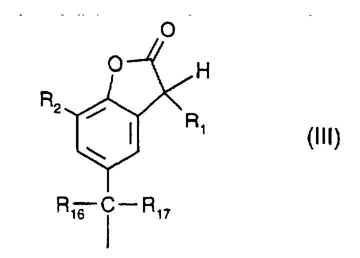 bedeutet, worin R₁ wie oben für n = 1 angegeben definiert ist,
R₆ Wasserstoff oder einen Rest der Formel IV 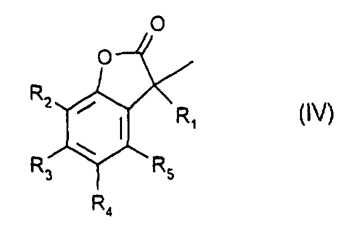 darstellt, wobei R₄ nicht einen Rest der Formel III bedeutet und R₁ wie oben für n = 1 angegeben definiert ist,
R₇, R₈, R₉, R₁₀ und R₁₁ unabhängig voneinander Wasserstoff, Halogen, Hydroxy, C₁-C₂₅-Alkyl, durch Sauerstoff, Schwefel oder 〉N―R₁₄ unterbrochenes C₂-C₂₅-Alkyl; C₁-C₂₅-Alkoxy, durch Sauerstoff, Schwefel oder 〉N―R₁₄ unterbrochenes C₂-C₂₅-Alkoxy; C₁-C₂₅-Alkylthio, C₃-C₂₅-Alkenyl, C₃-C₂₅-Alkenyloxy, C₃-C₂₅-Alkinyl, C₃-C₂₅-Alkinyloxy, C₇-C₉-Phenylalkyl, C₇-C₉-Phenylalkoxy, unsubstituiertes oder durch C₁-C₄-Alkyl substituiertes Phenyl; unsubstituiertes oder durch C₁-C₄-Alkyl substituiertes Phenoxy; unsubstituiertes oder durch C₁-C₄-Alkyl substituiertes C₅-C₈-Cycloalkyl; unsubstituiertes oder durch C₁-C₄-Alkyl substituiertes C₅-C₈-Cycloalkoxy; C₁-C₄-Alkylamino, Di-(C₁-C₄-alkyl)amino, C₁-C₂₅-Alkanoyl, durch Sauerstoff, Schwefel oder 〉N―R₁₄ unterbrochenes C₃-C₂₅-Alkanoyl; C₁-C₂₅-Alkanoyloxy, durch Sauerstoff, Schwefel oder 〉N―R₁₄ unterbrochenes C₃-C₂₅-Alkanoyloxy; C₁-C₂₅-Alkanoylamino, C₃-C₂₅-Alkenoyl, durch Sauerstoff, Schwefel oder 〉N―R₁₄ unterbrochenes C₃-C₂₅-Alkenoyl; C₃-C₂₅-Alkenoyloxy, durch Sauerstoff, Schwefel oder 〉N―R₁₄ unterbrochenes C₃-C₂₅-Alkenoyloxy; C₆-C₉-Cycloalkylcarbonyl, C₆-C₉-Cycloalkylcarbonyloxy, Benzoyl oder durch C₁-C₁₂-Alkyl substituiertes Benzoyl; Benzoyloxy oder durch C₁-C₁₂-Alkyl substituiertes Benzoyloxy; 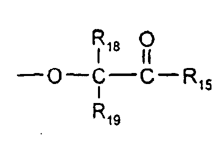 oder 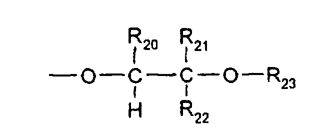 darstellen, oder ferner in Formel II die Reste R₇ und R₈ oder die Reste R₈ und R₁₁ zusammen mit den Kohlenstoffatomen, an die sie gebunden sind, einen Benzoring bilden,
R₁₂ und R₁₃ unabhängig voneinander unsubstituiertes oder durch C₁-C₄-Alkyl substituiertes Phenylen oder Naphthylen darstellen,
R₁₄ Wasserstoff oder C₁-C₈-Alkyl ist,
R₁₅ Hydroxy, 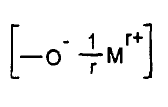 , C₁-C₁₈-Alkoxy oder 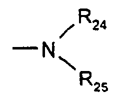 bedeutet,
R₁₆ und R₁₇ unabhängig voneinander Wasserstoff, CF₃, C₁-C₁₂-Alkyl oder Phenyl darstellen, oder R₁₆ und R₁₇ zusammen mit dem C-Atom, an das sie gebunden sind, einen unsubstituierten oder durch 1 bis 3 C₁-C₄-Alkyl substituierten C₅-C₈-Cycloalkylidenring bilden;
R₁₈ und R₁₉ unabhängig voneinander Wasserstoff, C₁-C₄-Alkyl oder Phenyl darstellen,
R₂₀ Wasserstoff oder C₁-C₄-Alkyl ist,
R₂₁ Wasserstoff, unsubstituiertes oder durch C₁-C₄-Alkyl substituiertes Phenyl; C₁-C₂₅-Alkyl, durch Sauerstoff, Schwefel oder 〉N―R₁₄ unterbrochenes C₂-C₂₅-Alkyl; unsubstituiertes oder am Phenylrest durch 1 bis 3 C₁-C₄-Alkyl substituiertes C₇-C₉-Phenylalkyl; durch Sauerstoff, Schwefel oder 〉N―R₁₄ unterbrochenes unsubstituiertes oder am Phenylrest durch 1 bis 3 C₁-C₄-Alkyl substituiertes C₇-C₂₅-Phenylalkyl bedeutet, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten C₅-C₁₂-Cycloalkylenring bilden;
R₂₂ Wasserstoff oder C₁-C₄-Alkyl darstellt,
R₂₃ Wasserstoff, C₁-C₂₅-Alkanoyl, C₃-C₂₅-Alkenoyl, durch Sauerstoff, Schwefel oder 〉N―R₁₄ unterbrochenes C₃-C₂₅-Alkanoyl; durch eine Di(C₁-C₆-alkyl)phosphonatgruppe substituiertes C₂-C₂₅-Alkanoyl; C₆-C₉-Cycloalkylcarbonyl, Thenoyl, Furoyl, Benzoyl oder durch C₁-C₁₂-Alkyl substituiertes Benzoyl; 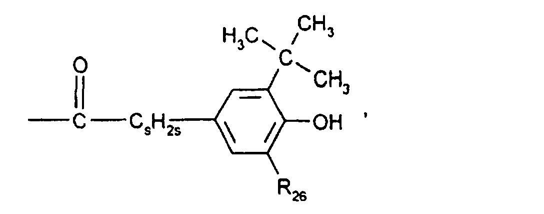 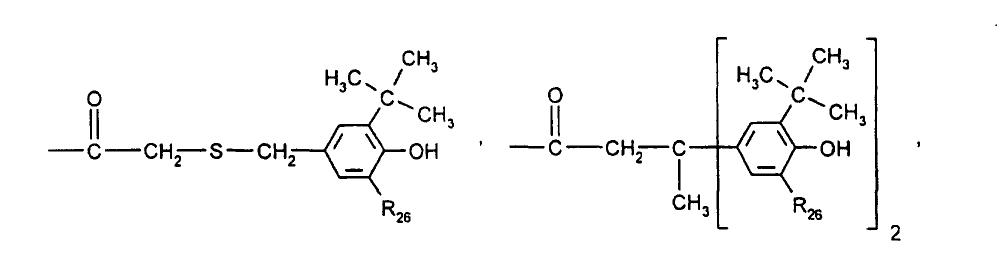 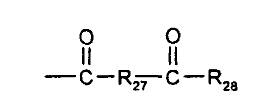 oder 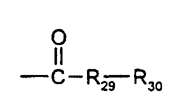 bedeutet,
R₂₄ und R₂₅ unabhängig voneinander Wasserstoff oder C₁-C₁₈-Alkyl darstellen,
R₂₆ Wasserstoff oder C₁-C₈-Alkyl darstellt,
R₂₇ eine direkte Bindung, C₁-C₁₈-Alkylen, durch Sauerstoff, Schwefel oder 〉N―R₁₄ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen, 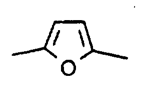 oder 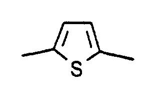 darstellt,
R₂₈ Hydroxy, 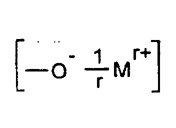 , C₁-C₁₈-Alkoxy oder 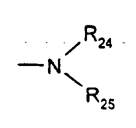 bedeutet,
R₂₉ Sauerstoff, -NH- oder 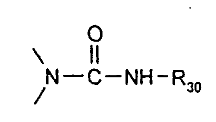 darstellt,
R₃₀ C₁-C₁₈-Alkyl oder Phenyl ist,
R₃₁ Wasserstoff oder C₁-C₁₈-Alkyl bedeutet,
M ein r-wertiges Metallkation ist,
X eine direkte Bindung, Sauerstoff, Schwefel oder -NR₃₁- darstellt,
n 1 oder 2 ist,
p 0, 1 oder 2 bedeutet,
q 1, 2, 3, 4, 5 oder 6 darstellt,
r 1, 2 oder 3 ist, und
s 0, 1 oder 2 bedeutet.

Unsubstituiertes oder mit C₁-C₄-Alkyl, C₁-C₄-Alkoxy, C₁-C₄-Alkylthio, Hydroxy, Halogen, Amino, C₁-C₄-Alkylamino, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]thienyl, Naphtho[2,3-b]thienyl, Thianthrenyl, Dibenzofuryl, Chromenyl, Xanthenyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phtalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl bedeutet beispielsweise 1-Naphthyl, 2-Naphthyl, 1-Phenylamino-4-naphthyl, 1-Methylnaphthyl, 2-Methylnaphthyl, 1-Methoxy-2-naphthyl, 2-Methoxy-1-naphthyl, 1-Dimethylamino-2-naphthyl, 1,2-Dimethyl-4-naphthyl, 1,2-Dimethyl-6-naphthyl, 1,2-Dimethyl-7-naphthyl, 1,3-Dimethyl-6-naphthyl, 1,4-Dimethyl-6-naphthyl, 1,5-Dimethyl-2-naphthyl, 1,6-Dimethyl-2-naphthyl, 1-Hydroxy-2-naphthyl, 2-Hydroxy-1-naphthyl, 1,4-Dihydroxy-2-naphthyl, 7-Phenanthryl, 1-Anthryl, 2-Anthryl, 9-Anthryl, 3-Benzo[b]thienyl, 5-Benzo[b]thienyl, 2-Benzo[b]thienyl, 4-Dibenzofuryl, 4,7-Dibenzofuryl, 4-Methyl-7-dibenzofuryl, 2-Xanthenyl, 8-Methyl-2-xanthenyl, 3-Xanthenyl, 2-Phenoxathiinyl, 2,7-Phenoxathiinyl, 2-Pyrrolyl, 3-Pyrrolyl, 5-Methyl-3-pyrrolyl, 2-Imidazolyl, 4-lmidazolyl, 5-Imidazolyl, 2-Methyl-4-imidazolyl, 2-Ethyl-4-imidazolyl, 2-Ethyl-5-imidazolyl, 3-Pyrazolyl, 1-Methyl-3-pyrazolyl, 1-Propyl-4-pyrazolyl, 2-Pyrazinyl, 5,6-Dimethyl-2-pyrazinyl, 2-Indolizinyl, 2-Methyl-3-isoindolyl, 2-Methyl-1-isoindolyl, 1-Methyl-2-indolyl, 1-Methyl-3-indolyl, 1,5-Dimethyl-2-indolyl, 1-Methyl-3-indazolyl, 2,7-dimethyl-8-purinyl, 2-Methoxy-7-methyl-8-purinyl, 2-Chinolizinyl, 3-lsochinolyl, 6-lsochinolyl, 7-lsochinolyl, Isochinolyl, 3-Methoxy-6-isochinolyl, 2-Chinolyl, 6-Chinolyl, 7-Chinolyl, 2-Methoxy-3-chinolyl, 2-Methoxy-6-chinolyl, 6-Phtalazinyl, 7-Phtalazinyl, 1 -Methoxy-6-phtalazinyl, 1,4-Dimethoxy-6-phtalazinyl, 1,8-Naphthyridin-2-yl, 2-Chinoxalinyl, 6-Chinoxalinyl, 2,3-Dimethyl-6-chinoxalinyl, 2,3-Dimethoxy-6-chinoxalinyl, 2-Chinazolinyl, 7-Chinazolinyl, 2-Dimethylamino-6-chinazolinyl, 3-Cinnolinyl,6-Cinnolinyl, 7-Cinnolinyl, 3-Methoxy-7-cinnolinyl, 2-Pteridinyl, 6-Pteridinyl, 7-Pteridinyl, 6,7-Dimethoxy-2-pteridinyl, 2-Carbazolyl, 3-Carbazolyl, 9-Methyl-2-Carbazolyl, 9-Methyl-3-Carbazolyl, β-Carbolin-3-yl, 1-Methyl-β-carbolin-3-yl, 1-Methyl-β-Carbolin-6-yl, 3-Phenanthridinyl, 2-Acridinyl, 3-Acridinyl, 2-Perimidinyl, 1-Methyl-5-perimidinyl, 5-Phenanthrolinyl, 6-Phenanthrolinyl, 1-Phenazinyl, 2-Phenazinyl, 3-Isothiazolyl, 4-Isothiazolyl, 5-Isothiazolyl, 2-Phenothiazinyl, 3-Phenothiazinyl, 10-Methyl-3-phenothiazinyl, 3-Isoxazolyl, 4-Isoxazolyl, 5-lsoxazolyl, 4-Methyl-3-furazanyl, 2-Phenoxazinyl oder 10-Methyl-2-phenoxazinyl.

Besonders bevorzugt sind unsubstituiertes oder mit C₁-C₄-Alkyl, C₁-C₄-Alkoxy, C₁-C₄-Alkylthio, Hydroxy, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]-thienyl, Naphtho[2,3-b]thienyl, Thianthrenyl, Dibenzofuryl, Chromenyl, Xanthenyl, Phenoxathiinyl, Pyrrolyl, Isoindolyl, Indolyl, Phenothiazinyl, Biphenyl, Terphenyl, Fluorenyl oder Phenoxazinyl wie beispielsweise 1-Naphthyl, 2-Naphthyl, 1-Phenylamino-4-naphthyl, 1-Methylnaphthyl, 2-Methylnaphthyl, 1-Methoxy-2-naphthyl, 2-Methoxy-1-naphthyl, 1-Dimethylamino-2-naphthyl, 1,2-Dimethyl-4-naphthyl, 1,2-Dimethyl-6-naphthyl, 1,2-Dimethyl-7-naphthyl, 1,3-Dimethyl-6-naphthyl, 1,4-Dimethyl-6-naphthyl, 1,5-Dimethyl-2-naphthyl, 1,6-Dimethyl-2-naphthyl, 1-Hydroxy-2-naphthyl, 2-Hydroxy-1-naphthyl, 1,4-Dihydroxy-2-naphthyl, 7-Phenanthryl, 1-Anthryl, 2-Anthryl, 9-Anthryl, 3-Benzo[b]thienyl, 5-Benzo[b]thienyl, 2-Benzo[b]-thienyl, 4-Dibenzofuryl, 4,7-Dibenzofuryl, 4-Methyl-7-dibenzofuryl, 2-Xanthenyl, 8-Methyl-2-xanthenyl, 3-Xanthenyl, 2-Pyrrolyl, 3-Pyrrolyl, 2-Phenothiazinyl, 3-Phenothiazinyl, 10-Methyl-3-phenothiazinyl.

Halogen bedeutet beispielsweise Chlor, Brom oder lod. Bevorzugt ist Chlor.

Alkanoyl mit bis zu 25 Kohlenstoffatomen bedeutet einen verzweigten oder unverzweigten Rest wie beispielsweise Formyl, Acetyl, Propionyl, Butanoyl, Pentanoyl, Hexanoyl, Heptanoyl, Octanoyl, Nonanoyl, Decanoyl, Undecanoyl, Dodecanoyl, Tridecanoyl, Tetradecanoyl, Pentadecanoyl, Hexadecanoyl, Heptadecanoyl, Octadecanoyl, Eicosanoyl oder Docosanoyl. Bevorzugt ist Alkanoyl mit 2 bis 18, insbesondere 2 bis 12, z.B. 2 bis 6 Kohlenstoffatomen. Besonders bevorzugt ist Acetyl.

Durch eine Di(C₁-C₆-alkyl)phosphonatgruppe substituiertes C₂-C₂₅-Alkanoyl bedeutet beispielsweise (CH₃CH₂O)₂POCH₂CO-, (CH₃O)₂POCH₂CO-, (CH₃CH₂CH₂CH₂O)₂POCH₂CO-, (CH₃CH₂O)₂POCH₂CH₂CO-, (CH₃O)₂POCH₂CH₂CO-, (CH₃CH₂CH₂CH₂O)₂POCH₂CH₂CO-, (CH₃CH₂O)₂PO(CH₂)₄CO-, (CH₃CH₂O)₂PO(CH₂)₈CO- oder (CH₃CH₂O)₂PO(CH₂)₁₇CO-.

Alkanoyloxy mit bis zu 25 Kohlenstoffatomen bedeutet einen verzweigten oder unverzweigten Rest wie beispielsweise Formyloxy, Acetoxy, Propionyloxy, Butanoyloxy, Pentanoyloxy, Hexanoyloxy, Heptanoyloxy, Octanoyloxy, Nonanoyloxy, Decanoyloxy, Undecanoyloxy, Dodecanoyloxy, Tridecanoyloxy, Tetradecanoyloxy, Pentadecanoyloxy, Hexadecanoyloxy, Heptadecanoyloxy, Octadecanoyloxy, Eicosanoyloxy oder Docosanoyloxy. Bevorzugt ist Alkanoyloxy mit 2 bis 18, insbesondere 2 bis 12, z.B. 2 bis 6 Kohlenstoffatomen. Besonders bevorzugt ist Acetoxy.

Alkenoyl mit 3 bis 25 Kohlenstoffatomen bedeutet einen verzweigten oder unverzweigten Rest wie beispielsweise Propenoyl, 2-Butenoyl, 3-Butenoyl, Isobutenoyl, n-2,4-Pentadienoyl, 3-Methyl-2-butenoyl, n-2-Octenoyl, n-2-Dodecenoyl, iso-Dodecenoyl, Oleoyl, n-2-Octadecenoyl oder n-4-Octadecenoyl. Bevorzugt ist Alkenoyl mit 3 bis 18, insbesondere 3 bis 12, z.B. 3 bis 6, vor allem 3 bis 4 Kohlenstoffatomen.

Durch Sauerstoff, Schwefel oder 〉N―R₁₄ unterbrochenes C₃-C₂₅-Alkenoyl bedeutet beispielsweise CH₃OCH₂CH₂CH=CHCO- oder CH₃OCH₂CH₂OCH=CHCO-.

Alkenoyloxy mit 3 bis 25 Kohlenstoffatomen bedeutet einen verzweigten oder unverzweigten Rest wie beispielsweise Propenoyloxy, 2-Butenoyloxy, 3-Butenoyloxy, Isobutenoyloxy, n-2,4-Pentadienoyloxy, 3-Methyl-2-butenoyloxy, n-2-Octenoyloxy, n-2-Dodecenoyloxy, iso-Dodecenoyloxy, Oleoyloxy, n-2-Octadecenoyloxy oder n-4-Octadecenoyloxy. Bevorzugt ist Alkenoyloxy mit 3 bis 18, insbesondere 3 bis 12, z.B. 3 bis 6, vor allem 3 bis 4 Kohlenstoffatomen.

Durch Sauerstoff, Schwefel oder 〉N―R₁₄ unterbrochenes C₃-C₂₅-Alkenoyloxy bedeutet beispielsweise CH₃OCH₂CH₂CH=CHCOO- oder CH₃OCH₂CH₂OCH=CHCOO-.

Durch Sauerstoff, Schwefel oder 〉N―R₁₄ unterbrochenes C₃-C₂₅-Alkanoyl bedeutet beispielsweise CH₃-O-CH₂CO-, CH₃-S-CH₂CO-, CH₃-NH-CH₂CO-, CH₃-N(CH₃)-CH₂CO-, CH₃-O-CH₂CH₂-O-CH₂CO-, CH₃-(O-CH₂CH₂-)₂O-CH₂CO-, CH₃-(O-CH₂CH₂-)₃O-CH₂COoder CH₃-(O-CH₂CH₂-)₄O-CH₂CO-.

Durch Sauerstoff, Schwefel oder 〉N―R₁₄ unterbrochenes C₃-C₂₅-Alkanoyloxy bedeutet beispielsweise CH₃-O-CH₂COO-, CH₃-S-CH₂COO-, CH₃-NH-CH₂COO-, CH₃-N(CH₃)-CH₂COO-, CH₃-O-CH₂CH₂-O-CH₂COO-, CH₃-(O-CH₂CH₂-)₂O-CH₂COO-, CH₃-(O-CH₂CH₂-)₃O-CH₂COO- oder CH₃-(O-CH₂CH₂-)₄O-CH₂COO-.

C₆-C₉-Cycloalkylcarbonyl bedeutet beispielsweise Cyclohexylcarbonyl, Cycloheptylcarbonyl oder Cyclooctylcarbonyl. Cyclohexylcarbonyl ist bevorzugt.

C₆-C₉-Cycloalkylcarbonyloxy bedeutet beispielsweise Cyclohexylcarbonyloxy, Cycloheptylcarbonyloxy oder Cyclooctylcarbonyloxy. Cyclohexylcarbonyloxy ist bevorzugt.

Durch C₁-C₁₂-Alkyl substituiertes Benzoyl, das vorzugsweise 1 bis 3, insbesondere 1 oder 2 Alkylgruppen trägt, bedeutet beispielsweise o-, m- oder p-Methylbenzoyl, 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2-Methyl-6-ethylbenzoyl, 4-tert-Butylbenzoyl, 2-Ethylbenzoyl, 2,4,6-Trimethylbenzoyl, 2,6-Dimethyl-4-tert-butylbenzoyl oder 3,5-Di-tert-butylbenzoyl. Bevorzugte Substituenten sind C₁-C₈-Alkyl, insbesondere C₁-C₄-Alkyl.

Durch C₁-C₁₂-Alkyl substituiertes Benzoyloxy, das vorzugsweise 1 bis 3, insbesondere 1 oder 2 Alkylgruppen trägt, bedeutet beispielsweise o-, m- oder p-Methylbenzoyloxy, 2,3-Dimethylbenzoyloxy, 2,4-Dimethylbenzoyloxy, 2,5-Dimethylbenzoyloxy, 2,6-Dimethylbenzoyloxy, 3,4-Dimethylbenzoyloxy, 3,5-Dimethylbenzoyloxy, 2-Methyl-6-ethylbenzoyloxy, 4-tert-Butylbenzoyloxy, 2-Ethylbenzoyloxy, 2,4,6-Trimethylbenzoyloxy, 2,6-Dimethyl-4-tert-butylbenzoyloxy oder 3,5-Di-tert-butylbenzoyloxy. Bevorzugte Substituenten sind C₁-C₈-Alkyl, insbesondere C₁-C₄-Alkyl.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von R₂ und R₄ ist beispielweise C₁-C₁₈-Alkyl. Eine besonders bevorzugte Bedeutung von R₄ ist C₁-C₄-Alkyl.

Alkenyl mit 3 bis 25 Kohlenstoffatomen bedeutet einen verzweigten oder unverzweigten Rest wie beispielsweise Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Bevorzugt ist Alkenyl mit 3 bis 18, insbesondere 3 bis 12, z.B. 3 bis 6, vor allem 3 bis 4 Kohlenstoffatomen.

Alkenyloxy mit 3 bis 25 Kohlenstoffatomen bedeutet einen verzweigten oder unverzweigten Rest wie beispielsweise Propenyloxy, 2-Butenyloxy, 3-Butenyloxy, Isobutenyloxy, n-2,4-Pentadienyloxy, 3-Methyl-2-butenyloxy, n-2-Octenyloxy, n-2-Dodecenyloxy, iso-Dodecenyloxy, Oleyloxy, n-2-Octadecenyloxy oder n-4-Octadecenyloxy. Bevorzugt ist Alkenyloxy mit 3 bis 18, insbesondere 3 bis 12, z.B. 3 bis 6, vor allem 3 bis 4 Kohlenstoffatomen.

Alkinyl mit 3 bis 25 Kohlenstoffatomen bedeutet einen verzweigten oder unverzweigten Rest wie beispielsweise Propinyl ( ―CH₂-C≡CH ), 2-Butinyl, 3-Butinyl, n-2-Octinyl, oder n-2-Dodecinyl. Bevorzugt ist Alkinyl mit 3 bis 18, insbesondere 3 bis 12, z.B. 3 bis 6, vor allem 3 bis 4 Kohlenstoffatomen.

Alkinyloxy mit 3 bis 25 Kohlenstoffatomen bedeutet einen verzweigten oder unverzweigten Rest wie beispielsweise Propinyloxy ( ―OCH₂-C≡CH ) 2-Butinyloxy, 3-Butinyloxy, n-2-Octinyloxy, oder n-2-Dodecinyloxy. Bevorzugt ist Alkinyloxy mit 3 bis 18, insbesondere 3 bis 12, z.B. 3 bis 6, vor allem 3 bis 4 Kohlenstoffatomen.

Durch Sauerstoff, Schwefel oder 〉N―R₁₄ unterbrochenes C₂-C₂₅-Alkyl bedeutet beispielsweise CH₃-O-CH₂-, CH₃-S-CH₂-, CH₃-NH-CH₂-, CH₃-N(CH₃)-CH₂-, CH₃-O-CH₂CH₂-O-CH₂-, CH₃-(O-CH₂CH₂-)₂O-CH₂-, CH₃-(O-CH₂CH₂-)₃O-CH₂- oder CH₃-(O-CH₂CH₂-)₄O-CH₂-.

C₇-C₉-Phenylalkyl bedeutet beispielsweise Benzyl, α-Methylbenzyl, α,α-Dimethylbenzyl oder 2-Phenylethyl. Benzyl und α,α-Dimethylbenzyl ist bevorzugt.

Unsubstituiertes oder am Phenylrest durch 1 bis 3 C₁-C₄-Alkyl substituiertes C₇-C₉-Phenylalkyl bedeutet beispielsweise Benzyl, α-Methylbenzyl, α,α-Dimethylbenzyl, 2-Phenylethyl, 2-Methylbenzyl, 3-Methylbenzyl, 4-Methylbenzyl, 2,4-Dimethylbenzyl, 2,6-Dimethylbenzyl oder 4-tert-Butylbenzyl. Benzyl ist bevorzugt.

Durch Sauerstoff, Schwefel oder 〉N―R₁₄ unterbrochenes unsubstituiertes oder am Phenylrest durch 1 bis 3 C₁-C₄-Alkyl substituiertes C₇-C₂₅-Phenylalkyl bedeutet einen verzweigten oder unverzweigten Rest wie beispielsweise Phenoxymethyl, 2-Methyl-phenoxymethyl, 3-Methyl-phenoxymethyl, 4-Methyl-phenoxymethyl, 2,4-Dimethyl-phenoxymethyl, 2,3-Dimethyl-phenoxymethyl, Phenylthiomethyl, N-Methyl-N-phenyl-methyl, N-Ethyl-N-phenyl-methyl, 4-tert-Butyl-phenoxymethyl, 4-tert-Butyl-phenoxyethoxy-methyl, 2,4-Di-tert-butylphenoxymethyl, 2,4-Di-tert-butyl-phenoxyethoxymethyl, Phenoxyethoxyethoxyethoxymethyl, Benzyloxymethyl, Benzyloxyethoxymethyl, N-Benzyl-N-ethyl-methyl oder N-Benzyl-N-isopropyl-methyl.

C₇-C₉-Phenylalkoxy bedeutet beispielsweise Benzyloxy, α-Methylbenzyloxy, α,α-Dimethylbenzyloxy oder 2-Phenylethoxy. Benzyloxy ist bevorzugt.

Durch C₁-C₄-Alkyl substituiertes Phenyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-Butylphenyl, 2-Ethylphenyl oder 2,6-Diethylphenyl.

Durch C₁-C₄-Alkyl substituiertes Phenoxy, das vorzugsweise 1 bis 3, insbesondere 1 oder 2 Alkylgruppen enthält, bedeutet beispielsweise o-, m- oder p-Methylphenoxy, 2,3-Dimethylphenoxy, 2,4-Dimethylphenoxy, 2,5-Dimethylphenoxy, 2,6-Dimethylphenoxy, 3,4-Dimethylphenoxy, 3,5-Dimethylphenoxy, 2-Methyl-6-ethylphenoxy, 4-tert-Butylphenoxy, 2-Ethylphenoxy oder 2,6-Diethylphenoxy.

Unsubstituiertes oder durch C₁-C₄-Alkyl substituiertes C₅-C₈-Cycloalkyl bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl oder Cyclooctyl. Bevorzugt ist Cyclohexyl und tert-Butylcyclohexyl.

Unsubstituiertes oder durch C₁-C₄-Alkyl substituiertes C₅-C₈-Cycloalkoxy bedeutet beispielsweise Cyclopentoxy, Methylcyclopentoxy, Dimethylcyclopentoxy, Cyclohexoxy, Methylcyclohexoxy, Dimethylcyclohexoxy, Trimethylcyclohexoxy, tert-Butylcyclohexoxy, Cycloheptoxy oder Cyclooctoxy. Bevorzugt ist Cyclohexoxy und tert-Butylcyclohexoxy.

Alkoxy mit bis zu 25 Kohlenstoffatomen bedeutet einen verzweigten oder unverzweigten Rest wie beispielsweise Methoxy, Ethoxy, Propoxy, Isopropoxy, n-Butoxy, Isobutoxy, Pentoxy, Isopentoxy, Hexoxy, Heptoxy, Octoxy, Decyloxy, Tetradecyloxy, Hexadecyloxy oder Octadecyloxy. Bevorzugt ist Alkoxy mit 1 bis 12, insbesondere 1 bis 8, z.B. 1 bis 6 Kohlenstoffatomen.

Durch Sauerstoff, Schwefel oder 〉N―R₁₄ unterbrochenes C₂-C₂₅-Alkoxy bedeutet beispielsweise CH₃-O-CH₂CH₂O-, CH₃-S-CH₂CH₂O-, CH₃-NH-CH₂CH₂O-, CH₃-N(CH₃)-CH₂CH₂O-, CH₃-O-CH₂CH₂-O-CH₂CH₂O-, CH₃-(O-CH₂CH₂-)₂O-CH₂CH₂O-, CH₃-(O-CH₂CH₂-)₃O-CH₂CH₂O- oder CH₃-(O-CH₂CH₂-)₄O-CH₂CH₂O-.

Alkylthio mit bis zu 25 Kohlenstoffatomen bedeutet einen verzweigten oder unverzweigten Rest wie beispielsweise Methylthio, Ethylthio, Propylthio, Isopropylthio, n-Butylthio, Isobutylthio, Pentylthio, Isopentylthio, Hexylthio, Heptylthio, Octylthio, Decylthio, Tetradecylthio, Hexadecylthio oder Octadecylthio. Bevorzugt ist Alkylthio mit 1 bis 12, insbesondere 1 bis 8, z.B. 1 bis 6 Kohlenstoffatomen.

Alkylamino mit bis zu 4 Kohlenstoffatomen bedeutet einen verzweigten oder unverzweigten Rest wie beispielsweise Methylamino, Ethylamino, Propylamino, Isopropylamino, n-Butylamino, Isobutylamino oder tert-Butylamino.

Di-(C₁-C₄-alkyl)amino bedeutet auch, dass die beiden Reste unabhängig voneinander verzweigt oder unverzweigt sind wie beispielsweise Dimethylamino, Methylethylamino, Diethylamino, Methyl-n-propylamino, Methylisopropylamino, Methyl-n-butylamino, Methylisobutylamino, Ethylisopropylamino, Ethyl-n-butylamino, Ethylisobutylamino, Ethyl-tert-butylamino, Diethylamino, Diisopropylamino, Isopropyl-n-butylamino, Isopropylisobutylamino, Di-n-butylamino oder Di-isobutylamino.

Alkanoylamino mit bis zu 25 Kohlenstoffatomen bedeutet einen verzweigten oder unverzweigten Rest wie beispielsweise Formylamino, Acetylamino, Propionylamino, Butanoylamino, Pentanoylamino, Hexanoylamino, Heptanoylamino, Octanoylamino, Nonanoylamino, Decanoylamino, Undecanoylamino, Dodecanoylamino, Tridecanoylamino, Tetradecanoylamino, Pentadecanoylamino, Hexadecanoylamino, Heptadecanoylamino, Octadecanoylamino, Eicosanoylamino oder Docsanoylamino. Bevorzugt ist Alkanoylamino mit 2 bis 18, insbesondere 2 bis 12, z.B. 2 bis 6 Kohlenstoffatomen.

C₁-C₁₈-Alkylen bedeutet einen verzweigten oder unverzweigten Rest wie beispielsweise Methylen, Ethylen, Propylen, Trimethylen, Tetramethylen, Pentamethylen, Hexamethylen, Heptamethylen, Octamethylen, Decamethylen, Dodecamethylen oder Octadecamethylen. Bevorzugt ist C₁-C₁₂-Alkylen, insbesondere C₁-C₈-Alkylen.

Durch C₁-C₄-Alkyl substituierter C₅-C₁₂-Cycloalkylenring, der vorzugsweise 1 bis 3, insbesondere 1 oder 2 verzweigte oder unverzweigte Alkylgruppen-Reste enthält, bedeutet beispielsweise Cyclopentylen, Methylcyclopentylen, Dimethylcyclopentylen, Cyclohexylen, Methylcyclohexylen, Dimethylcyclohexylen, Trimethylcyclohexylen, tert-Butylcyclohexylen, Cycloheptylen, Cyclooctylen oder Cyclodecylen. Bevorzugt ist Cyclohexylen und tert-Butylcyclohexylen.

Durch Sauerstoff, Schwefel oder 〉N―R₁₄ unterbrochenes C₂-C₁₈-Alkylen bedeutet beispielsweise -CH₂-O-CH₂-, -CH₂-S-CH₂-, -CH₂-NH-CH₂-, -CH₂-N(CH₃)-CH₂-, -CH₂-O-CH₂CH₂-O-CH₂-, -CH₂-(O-CH₂CH₂-)₂O-CH₂-, -CH₂-(O-CH₂CH₂-)₃O-CH₂-, -CH₂-(O-CH₂CH₂-)₄O-CH₂- oder -CH₂CH₂-S-CH₂CH₂-.

C₂-C₁₈-Alkenylen bedeutet beispielsweise Vinylen, Methylvinylen, Octenylethylen oder Dodecenylethylen. Bevorzugt ist C₂-C₈-Alkenylen.

Alkyliden mit 2 bis 20 Kohlenstoffatomen bedeutet beispielsweise Ethyliden, Propyliden, Butyliden, Pentyliden, 4-Methylpentyliden, Heptyliden, Nonyliden, Tridecyliden, Nonadecyliden, 1-Methylethyliden, 1-Ethylpropyliden oder 1-Ethylpentyliden. Bevorzugt ist C₂-C₈-Alkyliden.

Phenylalkyliden mit 7 bis 20 Kohlenstoffatomen bedeutet beispielsweise Benzyliden, 2-Phenylethyliden oder 1-Phenyl-2-hexyliden. Bevorzugt ist C₇-C₉-Phenylalkyliden.

C₅-C₈-Cycloalkylen bedeutet eine gesättigte Kohlenwasserstoffgruppe mit zwei freien Valenzen und mindestens einer Ringeinheit und ist beispielsweise Cyclopentylen, Cyclohexylen, Cycloheptylen oder Cyclooctylen. Bevorzugt ist Cyclohexylen.

C₇-C₈-Bicycloalkylen bedeutet beispielsweise Bicycloheptylen oder Bicyclooctylen.

Unsubstituiertes oder durch C₁-C₄-Alkyl substituiertes Phenylen oder Naphthylen bedeutet beispielsweise 1,2-, 1,3-, 1,4-Phenylen, 1,2-, 1,3-, 1,4-, 1,6-, 1,7-, 2,6- oder 2,7-Naphthylen. 1,4-Phenylen ist bevorzugt.

Durch C₁-C₄-Alkyl substituierter C₅-C₈-Cycloalkylidenring, der vorzugsweise 1 bis 3, insbesondere 1 oder 2 verzweigte oder unverzweigte Alkylgruppen-Reste enthält, bedeutet beispielsweise Cyclopentyliden, Methylcyclopentyliden, Dimethylcyclopentyliden, Cyclohexyliden, Methylcyclohexyliden, Dimethylcyclohexyliden, Trimethylcyclohexyliden, tert-Butylcyclohexyliden, Cycloheptyliden oder Cyclooctyliden. Bevorzugt ist Cyclohexyliden und tert-Butylcyclohexyliden.

Ein ein-, zwei- oder drei-wertiges Metallkation ist vorzugsweise ein Alkalimetall-, Erdalkalimetall- oder Aluminium-Kation, beispielsweise Na⁺, K⁺, Mg⁺⁺, Ca⁺⁺ oder Al⁺⁺⁺.

Von Interesse sind Zusammensetzungen enthaltend als Komponente (b) mindestens eine Verbindung der Formel I, worin, wenn n 1 ist, R₁ unsubstituiertes oder in para-Stellung mit C₁-C₁₈-Alkylthio oder Di(C₁-C₄-alkyl)amino substituiertes Phenyl; mono- bis penta-substituiertes Alkylphenyl mit total zusammen maximal 18 Kohlenstoffatomen in den 1 bis 5 Alkylsubstituenten; unsubstituiertes oder mit C₁-C₄-Alkyl, C₁-C₄-Alkoxy, C₁-C₄-Alkylthio, Hydroxy oder Amino substituiertes Naphthyl, Biphenyl, Terphenyl, Phenanthryl, Anthryl, Fluorenyl, Carbazolyl, Thienyl, Pyrrolyl, Phenothiazinyl oder 5,6,7,8-Tetrahydronaphthyl darstellt.

Bevorzugt sind Zusammensetzungen enthaltend als Komponente (b) mindestens eine Verbindung der Formel I, worin, wenn n 2 ist,
R₁ -R₁₂-X-R₁₃- darstellt,
R₁₂ und R₁₃ Phenylen bedeuten,
X Sauerstoff oder -NR₃₁- darstellt, und
R₃₁ C₁-C₄-Alkyl bedeutet.

Bevorzugt sind auch Zusammensetzungen enthaltend als Komponente (b) mindestens eine Verbindung der Formel I, worin, wenn n 1 ist,
R₁ unsubstituiertes oder mit C₁-C₄-Alkyl, C₁-C₄-Alkoxy, C₁-C₄-Alkylthio, Hydroxy, Halogen, Amino, C₁-C₄-Alkylamino oder Di(C₁-C₄-alkyl)amino substituiertes Naphthyl, Phenanthryl, Thienyl, Dibenzofuryl, Carbazolyl, Fluorenyl oder einen Rest der Formel II 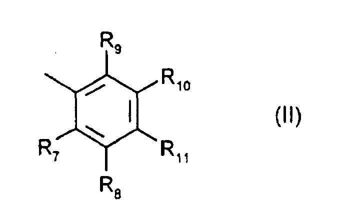 bedeutet,
R₇, R₈, R₉, R₁₀ und R₁₁ unabhängig voneinander Wasserstoff, Chlor, Brom, Hydroxy, C₁-C₁₈-Alkyl, durch Sauerstoff oder Schwefel unterbrochenes C₂-C₁₈-Alkyl; C₁-C₁₈-Alkoxy, durch Sauerstoff oder Schwefel unterbrochenes C₂-C₁₈-Alkoxy; C₁-C₁₈-Alkylthio, C₃-C₁₂-Alkenyloxy, C₃-C₁₂-Alkinyloxy, C₇-C₉-Phenylalkyl, C₇-C₉-Phenylalkoxy, unsubstituiertes oder durch C₁-C₄-Alkyl substituiertes Phenyl; Phenoxy, Cyclohexyl, C₅-C₈-Cycloalkoxy, C₁-C₄-Alkylamino, Di-(C₁-C₄-alkyl)amino, C₁-C₁₂-Alkanoyl, durch Sauerstoff oder Schwefel unterbrochenes C₃-C₁₂-Alkanoyl; C₁-C₁₂-Alkanoyloxy, durch Sauerstoff oder Schwefel unterbrochenes C₃-C₁₂-Alkanoyloxy; C₁-C₁₂-Alkanoylamino, C₃-C₁₂-Alkenoyl, C₃-C₁₂-Alkenoyloxy, Cyclohexylcarbonyl, Cyclohexylcarbonyloxy, Benzoyl oder durch C₁-C₄-Alkyl substituiertes Benzoyl; Benzoyloxy oder durch C₁-C₄-Alkyl substituiertes Benzoyloxy; 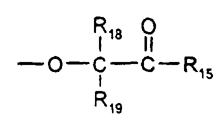 oder 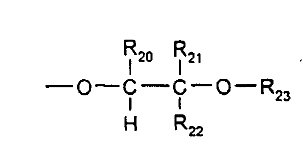 darstellen, oder ferner in Formel II die Reste R₇ und R₈ oder die Reste R₈ und R₁₁ zusammen mit den Kohlenstoffatomen, an die sie gebunden sind, einen Benzoring bilden,
R₁₅ Hydroxy, C₁-C₁₂-Alkoxy oder 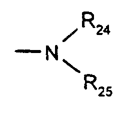 bedeutet,
R₁₈ und R₁₉ unabhängig voneinander Wasserstoff oder C₁-C₄-Alkyl darstellen,
R₂₀ Wasserstoff ist,
R₂₁ Wasserstoff, Phenyl, C₁-C₁₈-Alkyl, durch Sauerstoff oder Schwefel unterbrochenes C₂-C₁₈-Alkyl; C₇-C₉-Phenylalkyl, durch Sauerstoff oder Schwefel unterbrochenes unsubstituiertes oder am Phenylrest durch 1 bis 3 C₁-C₄-Alkyl substituiertes C₇-C₁₈-Phenylalkyl bedeutet, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten Cyclohexylenring bilden,
R₂₂ Wasserstoff oder C₁-C₄-Alkyl darstellt,
R₂₃ Wasserstoff, C₁-C₁₈-Alkanoyl, C₃-C₁₈-Alkenoyl, durch Sauerstoff oder Schwefel unterbrochenes C₃-C₁₂-Alkanoyl; durch eine Di(C₁-C₆-alkyl)phosphonatgruppe substituiertes C₂-C₁₂-Alkanoyl; C₆-C₉-Cycloalkylcarbonyl, Benzoyl, 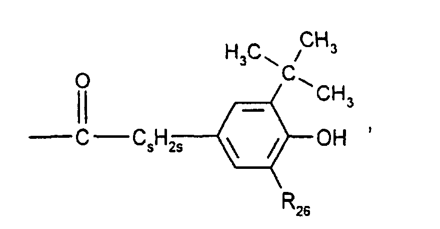 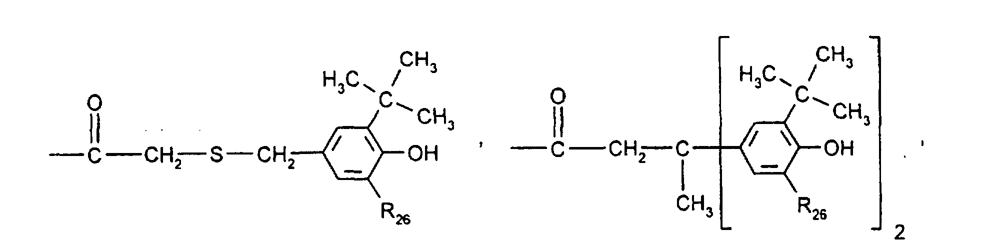 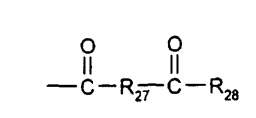 oder 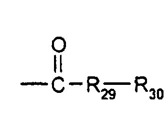 bedeutet,
R₂₄ und R₂₅ unabhängig voneinander Wasserstoff oder C₁-C₁₂-Alkyl darstellen,
R₂₆ Wasserstoff oder C₁-C₄-Alkyl bedeutet,
R₂₇ C₁-C₁₂-Alkylen, C₂-C₈-Alkenylen, C₂-C₈-Alkyliden, C₇-C₁₂-Phenylalkyliden, C₅-C₈-Cycloalkylen oder Phenylen darstellt,
R₂₈ Hydroxy, C₁-C₁₂-Alkoxy oder 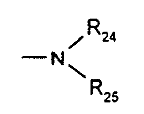 bedeutet,
R₂₉ Sauerstoff oder -NH- darstellt,
R₃₀ C₁-C₁₈-Alkyl oder Phenyl ist, und
s 1 oder 2 bedeutet.

Ebenfalls bevorzugt sind Zusammensetzungen enthaltend als Komponente (b) mindestens eine Verbindung der Formel I, worin, wenn n 1 ist,
R₁ Phenanthryl, Thienyl, Dibenzofuryl, unsubstituiertes oder mit C₁-C₄-Alkyl substituiertes Carbazolyl; oder Fluorenyl darstellt; oder R₁ einen Rest der Formel II 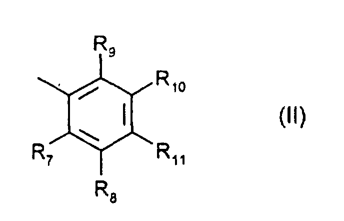 bedeutet,
R₇, R₈, R₉, R₁₀ und R₁₁ unabhängig voneinander Wasserstoff, Chlor, Hydroxy, C₁-C₁₈-Alkyl, C₁-C₁₈-Alkoxy, C₁-C₁₈-Alkylthio, C₃-C₄-Alkenyloxy, C₃-C₄-Alkinyloxy, Phenyl, Benzoyl, Benzoyloxy oder 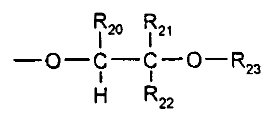 darstellen,
R₂₀ Wasserstoff bedeutet,
R₂₁ Wasserstoff, Phenyl oder C₁-C₁₈-Alkyl darstellt, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten Cyclohexylenring bilden,
R₂₂ Wasserstoff oder C₁-C₄-Alkyl bedeutet, und
R₂₃ Wasserstoff, C₁-C₁₂-Alkanoyl oder Benzoyl darstellt.

Besonders bevorzugt sind Zusammensetzungen enthaltend als Komponente (b) mindestens eine Verbindung der Formel I, worin, wenn n 1 ist,
R₇, R₈, R₉, R₁₀ und R₁₁ unabhängig voneinander Wasserstoff, C₁-C₁₂-Alkyl, C₁-C₄-Alkylthio oder Phenyl bedeuten.

Von besonderem Interesse sind Zusammensetzungen enthaltend als Komponente (b) mindestens eine Verbindung der Formel I, worin
R₂, R₃, R₄ und R₅ unabhängig voneinander Wasserstoff, Chlor, C₁-C₁₈-Alkyl, Benzyl, Phenyl, C₅-C₈-Cycloalkyl, C₁-C₁₈-Alkoxy, C₁-C₁₈-Alkylthio, C₁-C₁₈-Alkanoyloxy, C₁-C₁₈-Alkanoylamino, C₃-C₁₈-Alkenoyloxy oder Benzoyloxy darstellen; oder ferner die Reste R₂ und R₃ oder die Reste R₃ und R₄ oder die Reste R₄ und R₅ zusammen mit den Kohlenstoffatomen, an die sie gebunden sind, einen Benzoring bilden, R₄ zusätzlich -(CH₂)ₚ-COR₁₅ oder -(CH₂)_{q}OH darstellt, oder wenn R₃, R₅ und R₆ Wasserstoff sind, R₄ zusätzlich einen Rest der Formel III bedeutet,
R₁₅ Hydroxy, C₁-C₁₂-Alkoxy oder 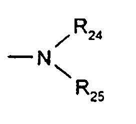 darstellt,
R₁₆ und R₁₇ Methylgruppen sind oder zusammen mit dem C-Atom, an das sie gebunden sind, einen unsubstituierten oder durch 1 bis 3 C₁-C₄-Alkyl substituierten C₅-C₈-Cycloalkylidenring bilden,
R₂₄ und R₂₅ unabhängig voneinander Wasserstoff oder C₁-C₁₂-Alkyl bedeuten,
p 1 oder 2 ist, und
q 2, 3, 4, 5 oder 6 darstellt.

Auch von besonderem Interesse sind Zusammensetzungen enthaltend als Komponente (b) mindestens eine Verbindung der Formel I, worin mindestens zwei der Reste R₂, R₃, R₄ und R₅ Wasserstoff sind.

Speziell von besonderem Interesse sind Zusammensetzungen enthaltend als Komponente (b) mindestens eine Verbindung der Formel I, worin R₃ und R₅ Wasserstoff sind.

Ganz speziell von besonderem Interesse sind Zusammensetzungen enthaltend als Komponente (b) mindestens eine Verbindung der Formel I, worin
R₂ C₁-C₄-Alkyl bedeutet,
R₃ Wasserstoff ist,
R₄ C₁-C₄-Alkyl darstellt, oder wenn R₆ Wasserstoff ist, R₄ zusätzlichen einen Rest der Formel III bedeutet,
R₅ Wasserstoff ist, und
R₁₆ und R₁₇ zusammen mit dem C-Atom, an das sie gebunden sind, einen Cyclohexylidenring bilden.

Die folgenden Verbindungen sind Beispiele vom Typ der Benzofuran-2-one, die sich als Komponente (b) in der erfindungsgemässen Zusammensetzung sich besonders gut eignen: 3-[4-(2-Acetoxyethoxy)phenyl]-5,7-di-tert-butyl-benzofuran-2-on; 5,7-Di-tert-butyl-3-[4-(2-stearoyloxyethoxy)phenyl]-benzofuran-2-on; 3,3'-Bis[5,7-di-tert-butyl-3-(4-[2-hydroxyethoxy]-phenyl)-benzofuran-2-on]; 5,7-Di-tert-butyl-3-(4-ethoxyphenyl)benzofuran-2-on; 3-(4-Acetoxy-3,5-dimethylphenyl)-5,7-di-tert-butyl-benzofuran-2-on; 3-(3,5-Dimethyl-4-pivaloyloxyphenyl)-5,7-di-tert-butyl-benzofuran-2-on; 5,7-Di-tert-butyl-3-phenyl-benzofuran-2-on; 5,7-Ditert-butyl-3-(3,4-dimethylphenyl)-benzofuran-2-on; 57-Di-tert-butyl-3-(2,3-dimethylphenyl)-benzofuran-2-on.

Speziell von besonderem Interesse sind auch Zusammensetzungen enthaltend als Komponente (b) mindestens eine Verbindung der Formel V 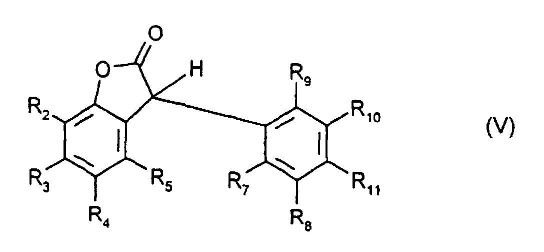 worin
R₂ Wasserstoff oder C₁-C₆-Alkyl darstellt,
R₃ Wasserstoff bedeutet,
R₄ Wasserstoff oder C₁-C₆-Alkyl darstellt,
R₅ Wasserstoff bedeutet,
R₇, R₈, R₉, R₁₀ und R₁₁ unabhängig voneinander Wasserstoff, C₁-C₄-Alkyl oder C₁-C₄-Alkoxy darstellt, mit der Bedingung, dass mindestens zwei der Reste R₇, R₈, R₉, R₁₀ oder R₁₁ Wasserstoff sind.

Ganz besonders bevorzugt sind Zusammensetzungen enthaltend als Komponente (b) mindestens eine Verbindung der Formel Va oder Vb 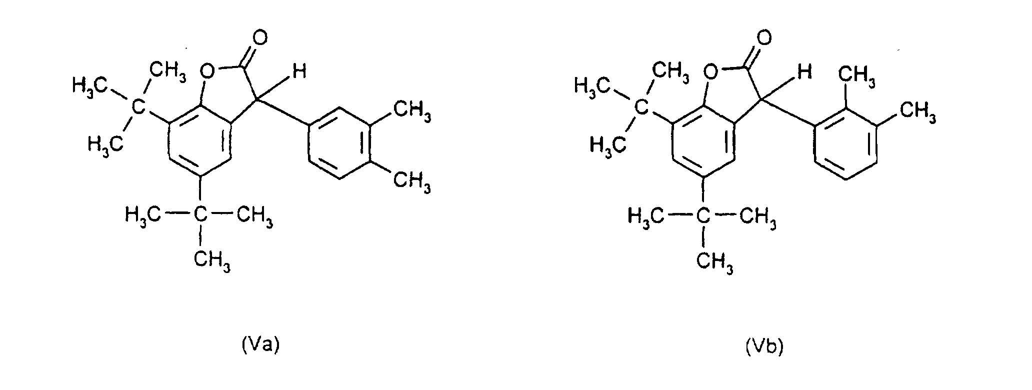 oder ein Gemisch der beiden Verbindungen der Formel Va und Vb.

Die Verbindungen vom Typ der Benzofuran-2-one als Komponente (b) in der erfindungsgemässen Zusammensetzung sind in der Literatur bekannt und deren Herstellung beispielsweise in den folgenden U.S. Patentschriften beschrieben: U.S. 4,325,863; U.S. 4,388,244; U.S. 5,175,312; U.S. 5,252,643; U.S. 5,216,052; U.S. 5,369,159; U.S. 5,488,117; U.S. 5,356,966; U.S. 5,367,008; U.S. 5,428,162; U.S. 5,428,177 oder U.S. 5,516,920.

Die Komponente (b) eignet sich zum Stabilisieren von dickschichtigen Polyolefinformkörpern, die im Dauerkontakt mit extrahierenden Medien sind.

### Beispiele für Polyolefine sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), (VLDPE) und (ULDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(lll)chlorid, Aluminiumoxid oder Siliziumoxid.
      Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-lsobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; femer Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.

Bevorzugte Polyolefine sind Polyethylen oder Polypropylen und deren Copolymere mit Mono- und Diolefinen.

Besonders hervorzuheben ist die Wirkung der Komponente (b) gegen oxidativen und thermischen Abbau von Polyolefinen wie sie bei der Verarbeitung von Thermoplasten auftritt. Die so stabilisierten Polyolefine zeichnen sich zudem durch eine hervorragende chemische Resistenz gegenüber in Dauerkontakt stehenden extrahierenden Medien aus.

Vorzugsweise wird die Komponente (b) dem zu stabilisierenden Polyolefin in einer Menge von 0,0005 bis 5 %, insbesondere 0,001 bis 2 %, beispielsweise 0,01 bis 2 %, zugesetzt, bezogen auf das Gewicht des zu stabilisierenden Polyolefins.

Zusätzlich zu der Komponente (b) können die erfindungsgemässen Zusammensetzungen weitere Costabilisatoren (Additive) enthalten, wie beispielsweise die folgenden:
1. Antioxidantien
   1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methylheptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
   1.4. Tocopherole, z.B. α-Tocopherol, β-Tocopherol, γ-Tocopherol, δ-Tocopherol und Mischungen davon (Vitamin E).
   1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
   1.6. Alkyliden-Bisphenole, z.B. 2,2'-Methylen-bis(6-tert-butyl-4-methylphenol), 2,2'-Methylenbis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-ditert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tertbutyl-4-hydroxy-2-methylphenyl)-pentan.
   1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-ditert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, lsooctyl-3,5-di-tert-butyl-4-hydroxybenzyl-mercaptoacetat.
   1.8. Hydroxybenzylierte Malonate, z.B. Dioctadecyl-22-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
   1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris-(3,5-di-tert-butyl-4-hydroxybenzyl)-phenol.
   1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tertbutyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tertbutyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
   1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3, 5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[22.2]-octan.
   1.17. Amide der β-(3,5-Di-tert-butyl-4-hydroxyphenyl)-propionsäure, wie z.B. N,N'-Bis(3,5-ditert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]oxamid (Naugard®XL-1 der Firma Uniroyal).
   1.18. Ascorbinsäure (Vitamin C).
   1.19. Aminische Antioxidantien, wie z.B. N,N'-Di-isopropyl-p-phenylendiamin, N,N'-Di-secbutyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyc-Iohexyl-p-phenylendiamin, in, N,N'-Diphenyl-p-phenylendiamin, N,N'-Di-(2-naphthyl)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-pphenylendiamin, 4-(p-Toluol-sulfonamido)-diphenylamin, N,N'-Dimethyl-N,N'-di-sec-butyl-pphenylendiamin, Diphenylamin, N-Allyldiphenylamin, 4-lsopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diaminodiphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.
2. UV-Absorber und Lichtschutzmittel
   2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tertbutyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; [R―CH₂CH₂―COO―CH₂CH₂⁆₂ mit R = 3'-tert-Butyl-4'-hydroxy-5'-2H-benzotriazol-2-ylphenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. - butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(22,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearytoxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-aminopiperidin oder 1,2,2,6,6-Pentamethyl-4-aminopiperidin.
   2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o-und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxyltridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tertbutyl-6-methylphenyl)-methylphosphit, Bis(2,4-di-tert-butyl-6-methylphenyl)-ethylphosphit, 2,2',2"-Nitrilo(triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit.
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alphaheptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-distearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Polyamidstabilisatoren, wie z.B. Kupfersalze in Kombination mit Jodiden und/oder Phosphorverbindungen und Salze des zweiwertigen Mangans.
10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkaliund Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinkbrenzcatechinat.
11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").
12. Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.
13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

Die Costabilisatoren, werden beispielsweise in Konzentrationen von 0,01 bis 10 %, bezogen auf das Gesamtgewicht des stabilisierenden Polyolefins, zugesetzt.

Die Füllstoffe und Verstärkungsmittel (Punkt 12 der Liste) wie beispielsweise Talk, Calciumcarbonat, Mica oder Kaolin werden dem Polyolefin beispielsweise in Konzentrationen von 0,01 bis 40%, bezogen auf das Gesamtgewicht des zu stabilisierenden Polyolefins, zugesetzt.

Die Füllstoffe und Verstärkungsmittel (Punkt 12 der Liste) wie beispielsweise Metallhydroxide, insbesondere Aluminiumhydroxid oder Magnesiumhydroxid, werden dem Polyolefin beispielsweise in Konzentrationen von 0,01 bis 60 %, bezogen auf das Gesamtgewicht des zu stabilisierenden Polyolefins, zugesetzt.

Russ als Füllstoff wird dem Polyolefin zweckmässig in Konzentrationen von 0,01 bis 5 %, bezogen auf das Gesamtgewicht des zu stabilisierenden Polyolefins, zugesetzt.

Glasfasern als Verstärkungsmittel wird dem Polyolefin zweckmässig in Konzentrationen von 0,01 bis 20 %, bezogen auf das Gesamtgewicht des zu stabilisierenden Polyolefins, zugesetzt.

Weitere bevorzugte Zusammensetzungen enthalten neben den Komponenten (a) und (b) noch weitere Additive, insbesondere phenolische Antioxidantien, Lichtschutzmittel oder Verarbeitungsstabilisatoren.

Besonders bevorzugte Additive sind phenolische Antioxidantien (Punkt 1.1 bis 1.17 der Liste), Phosphite und Phosphonite (Punkt 4 der Liste) und peroxidzerstörende Verbindungen (Punkt 8 der Liste).

Speziell bevorzugte phenolische Antioxidantien sind:

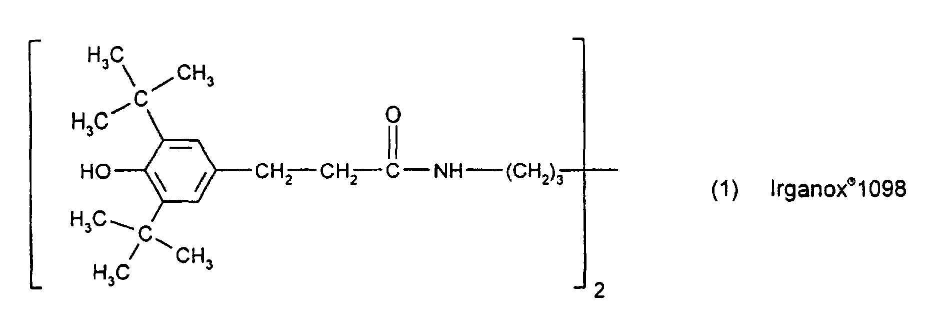

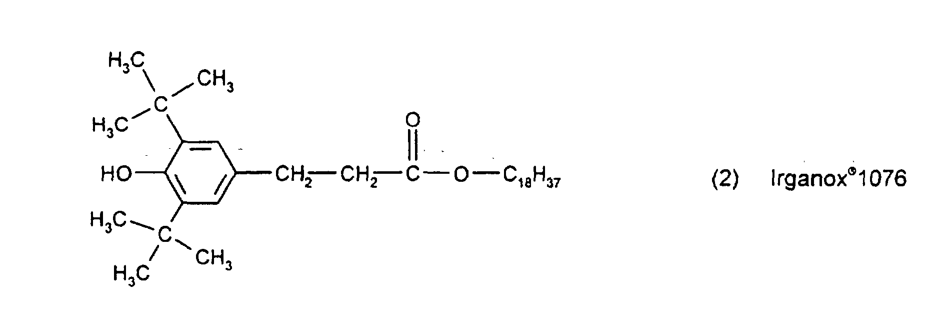

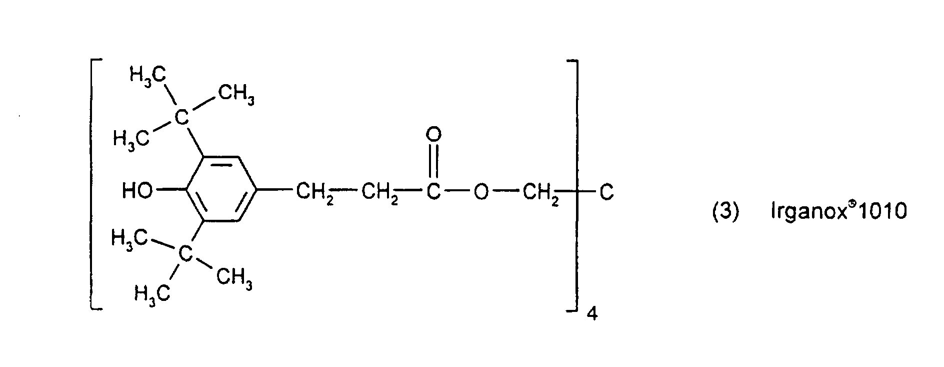

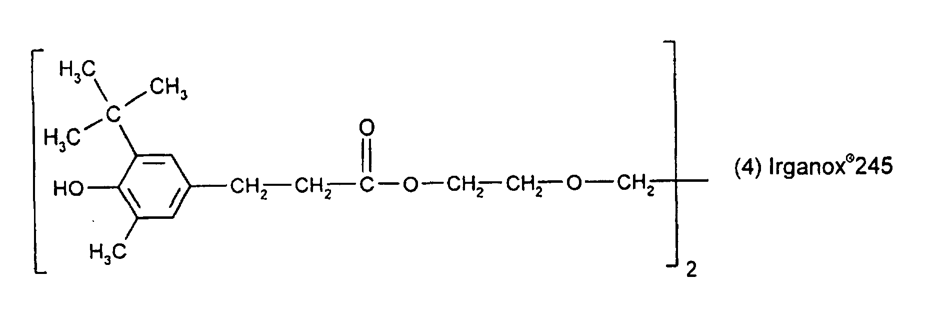

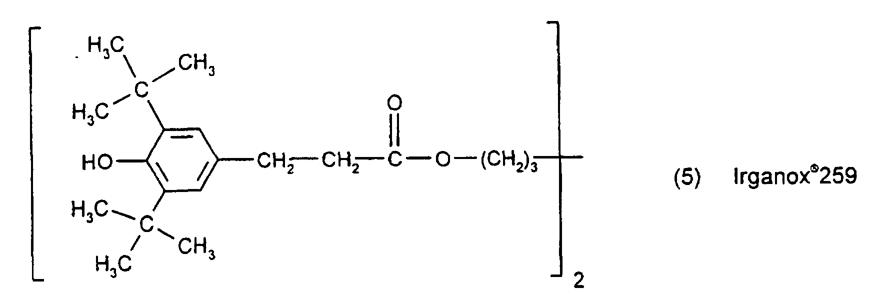

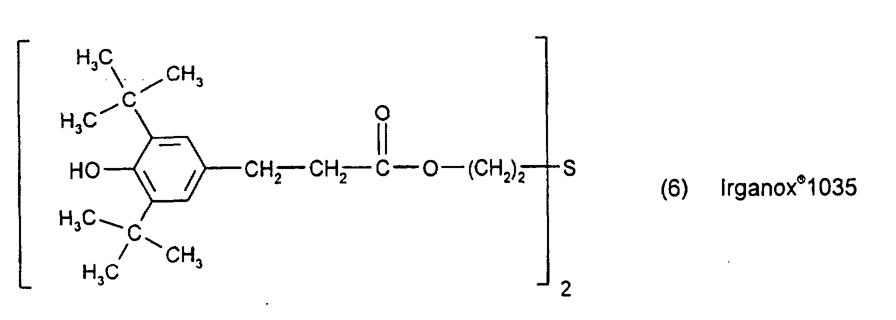

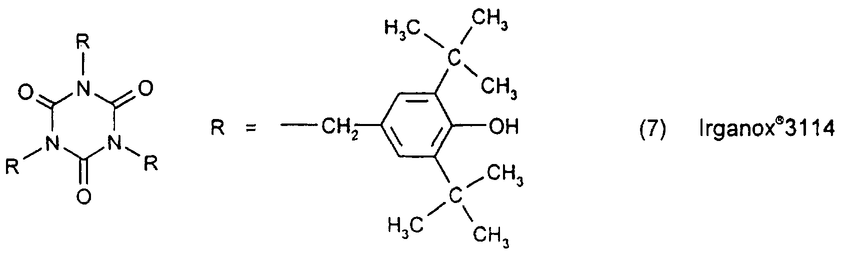

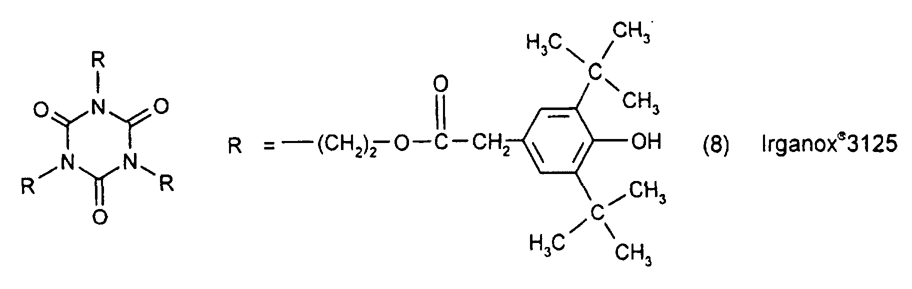

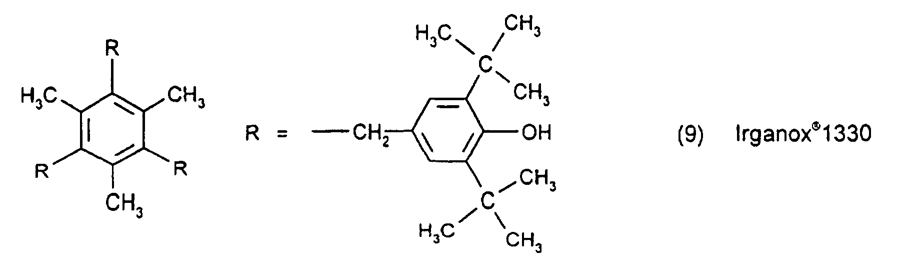

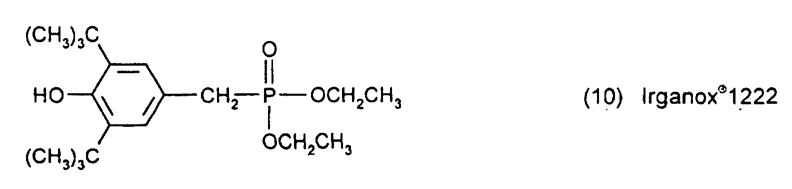

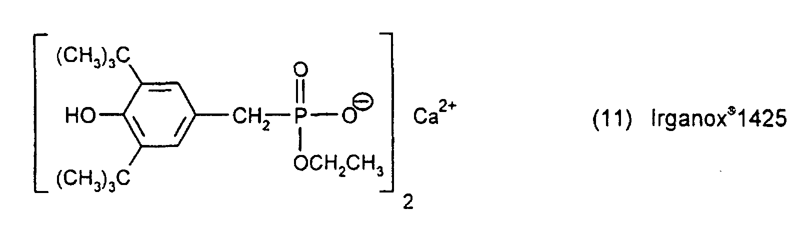

Irganox®1098, Irganox®1076, Irganox®1010, Irganox®245, Irganox®259, Irganox®1035, Irganox®3114, Irganox®3125, Irganox®1330, Irganox®1222 und Irganox®1425 sind geschützte Handelsnamen der Firma Ciba-Geigy.

Von besonderem Interesse ist eine Zusammensetzung enthaltend (a) ein dickschichtiger Polyolefinformkörper, der im Dauerkontakt mit extrahierenden Medien steht, (b) mindestens eine Verbindung vom Typ der Benzofuran-2-one und (c) mindestens eine Verbindung aus der Gruppe der phenolischen Antioxidantien; mit der Bedingung, dass die Komponente (a) keinen durch Rotomolding erhaltenen Polyolefinformkörper bedeutet.

Speziell bevorzugte Phosphite und Phosphonite sind:

Tris(2,4-di-tert-butylphenyl)-phosphit (Irgafos®168, Ciba-Geigy), Tris(nonylphenyl)-phosphit,

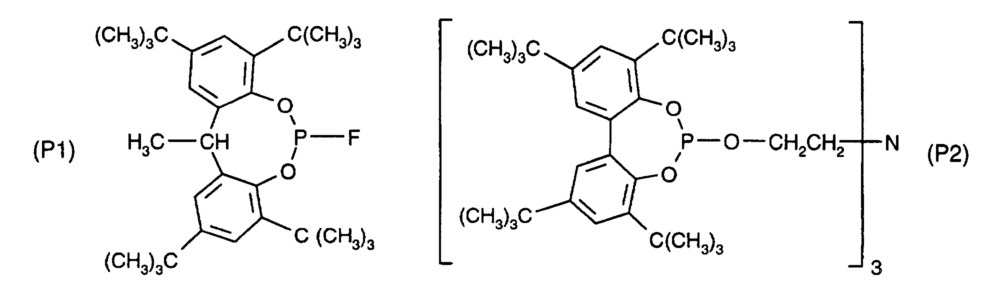

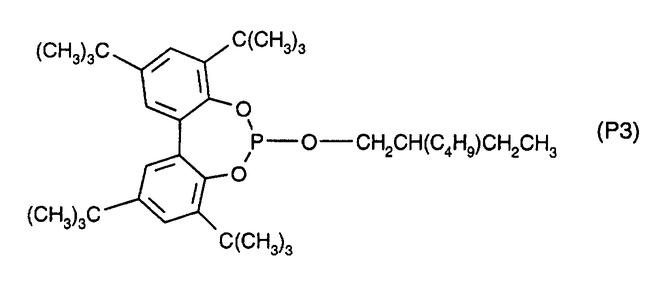

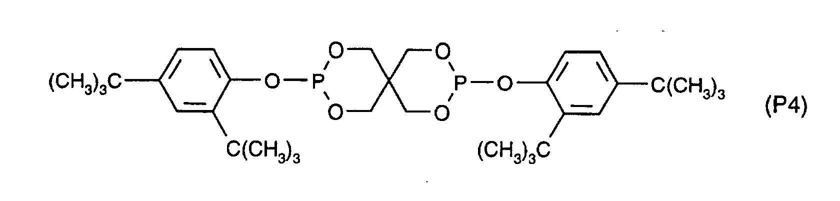

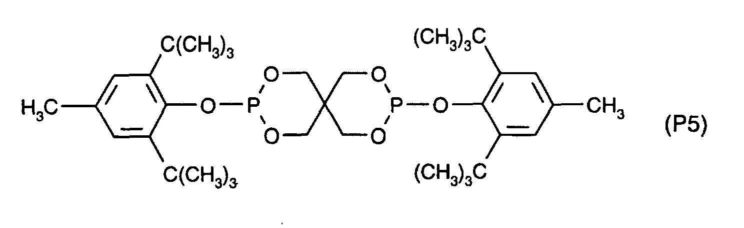

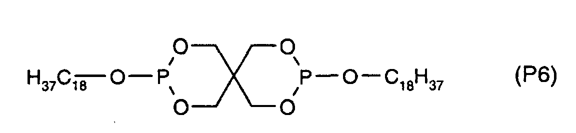

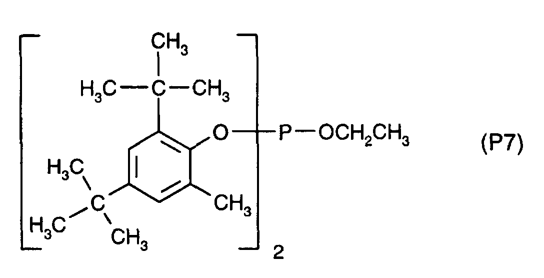

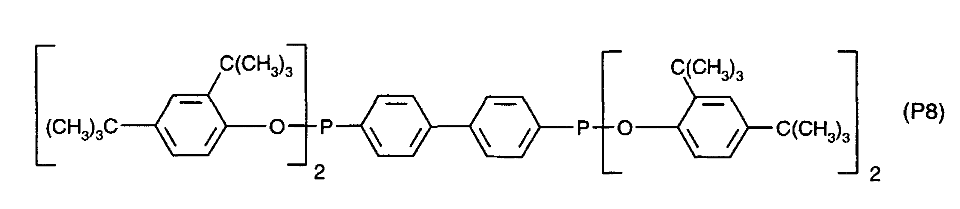

Ganz besonders bevorzugt wird Tris(2,4-di-tert-butylphenyl)-phosphit [Irgafos®168, Ciba-Geigy], Bis(2,4-di-tert-butyl-6-methylphenyl)-ethyl-phosphit [Irgafos®38, Ciba-Geigy, Formel (P7)] oder Tetrakis(2,4-di-tert-butylphenyl)-4,4'-biphenylen-diphosphonit [Irgafos®PEP-Q, Ciba-Geigy, Formel (P8)].

Ebenfalls von Interesse ist deshalb eine Zusammensetzung enthaltend (a) ein dickschichtiger Polyolefinformkörper, der im Dauerkontakt mit extrahierenden Medien steht, (b) mindestens eine Verbindung vom Typ der Benzofuran-2-one und (c) mindestens eine Verbindung aus der Gruppe der organischen Phosphite oder Phosphonite; mit der Bedingung, dass die Komponente (a) keinen durch Rotomolding erhaltenen Polyolefinformkörper bedeutet.

Als herkömmliche Stabilisator-Kombination zur Verarbeitung von Polyolefinen zu entsprechenden Formkörpern wird die Kombination eines phenolischen Antioxidans mit einem sekundären Antioxidans auf der Basis eines Phosphits oder Phosphonits empfohlen. Substratund Verfahrensspezifisch sind viele Polyolefin-Verarbeiter aber gezwungen, Verfahren im Hochtemperatur-Bereich über ca. 280°C zu betreiben. Dank der Einbeziehung eines Verarbeitungsstabilisators vom Typ der Benzofuran-2-one, die speziell für Hochtemperatur-Applikationen besonders im Temperaturbereich über 300°C geeignet sind, lassen sich technische Werkstoffe und Formkörper etwa auf Basis von HD Polyethylen wie beispielsweise Rohre und ihre technischen Varianten (Fittings) mit grösserem Ausstoss und geringerem Ausschuss herstellen. Ein weiterer Vorteil der Stabilisatoren vom Typ der Benzofuran-2-one besteht auch darin, dass sie in Kombination mit anderem Stabilisatoren in sehr geringer Menge eingesetzt werden können. Dies führt zu einer Reduktion der Antioxidans-Gesamtkonzentration gegenüber herkömmlichen Stabilisatormischungen. So erlaubt der Einsatz einer geringen Konzentration eines Stabilisators vom Typ der Benzofuran-2-one eine Reduktion der Gesamtstabilisatorkonzentration um etwa einen Drittel in Polyolefinen, was gleichzeitig einen ökonomischen Vorteil darstellt.

Die Einarbeitung der Komponente (b), sowie gegebenenfalls weiterer Additive in das Polyolefin, erfolgt nach bekannten Methoden, beispielsweise vor oder während der-Formgebung oder auch durch Aufbringen der gelösten oder dispergierten Stabilisatormischung auf das Polyolefin, gegebenenfalls unter nachträglichem Verdunsten des Lösungsmittels. Die Stabilisatormischung der Komponente (b) und gegebenenfalls weiterer Additive kann auch in Form eines Masterbatches, der diese beispielsweise in einer Konzentration von 2,5 bis 25 Gew.-% enthält, den zu stabilisierenden Polyolefinen zugesetzt werden.

Die Komponente (b) und gegebenenfalls weitere Additive können auch vor oder während der Polymerisation oder vor der Vernetzung zugegeben werden.

Die Komponente (b) und gegebenenfalls weitere Additive können in reiner Form oder in Wachsen, Oelen oder Polymeren verkapselt in das zu stabilisierende Polyolefin eingearbeitet werden.

Die Komponente (b) und gegebenenfalls weitere Additive können auch auf das zu stabilisierende Polyolefin aufgesprüht werden. Sie sind in der Lage, andere Zusätze (z.B. die oben angegebenen herkömmlichen Additive) bzw. deren Schmelzen zu verdünnen, so dass sie auch zusammen mit diesen Zusätzen auf das zu stabilisierende Polyolefin aufgesprüht werden können. Besonders vorteilhaft ist die Zugabe durch Aufsprühen während der Desaktivierung der Polymerisationskatalysatoren, wobei z.B. der zur Desaktivierung verwendete Dampf zum Versprühen verwendet werden kann.

Bei kugelförmig polymerisierten Polyolefinen kann es z.B. vorteilhaft sein, die Komponente (b) und gegebenenfalls zusammen mit anderen Additiven, durch Aufsprühen zu applizieren.

Die so stabilisierten Polyolefine können in verschiedenster Form angewendet werden, insbesondere als dickschichtige Polyolefinformkörper, die im Dauerkontakt mit extrahierenden Medien sind, wie beispielsweise Rohre für Flüssigkeiten oder Gase, Folien, Geomembrane, Bändchen, Profile oder Tanks.

Die bevorzugten dickschichtigen Polyolefinformkörper weisen eine Schichtdicke von 1 bis 50 mm, insbesondere 1 bis 30 mm, z.B. 2 bis 10 mm auf.

Die vorliegende Erfindung betrifft auch ein Verfahren zum Stabilisieren von Polyolefinen, die im Dauerkontakt mit extrahierenden Medien sind, das dadurch gekennzeichnet ist, dass man diesen mindestens eine Komponente (b) einverleibt oder auf diese aufbringt; mit der Bedingung, dass die Polyolefine keine durch Rotomolding erhaltene Polyolefin-Formkörper bedeuten.

Bevorzugt ist ein Verfahren zum Stabilisieren von Polyolefinen, die im Dauerkontakt mit extrahierenden Medien sind, worin die Polyolefine dickschichtige Polyolefinformkörper darstellen und eine Schichtdicke von 1 bis 50 mm, insbesondere 1 bis 30 mm, z.B. 2 bis 10 mm aufweisen.

Von besonderem Interesse ist auch ein Verfahren zum Stabilisieren von dickschichtigen Polyolefinformkörpern, die im Dauerkontakt mit extrahierenden Medien sind, worin die dickschichtigen Polyolefinformkörper Rohre oder Geomembrane bedeuten.

Unter Geomembranen werden Folien verstanden, die beispielweise in Abfalldeponien eingesetzt werden und eine Lebensdauer von bis zu 300 Jahren aufweisen müssen.

Extrahierende Medien bedeuten beispielsweise flüssige oder gasförmige anorganische oder organische Materialien.

Gasförmige anorganische Materialien sind beispielsweise Sauerstoff; Stickstoff; Stickoxide, z.B. NO, Lachgas oder NO₂; Schwefeloxide, z.B. Schwefeldioxid; Halogene, z.B. Fluor oder Chlor; Brönstedtsäuren, z.B. Fluorwasserstoffsäure, Salzsäure, Bromwasserstoffsäure, Jodwasserstoffsäure oder Blausäure; oder Basen, z.B. Ammoniak.

Gasförmige organische Materialien sind beispielsweise C₁-C₄-Alkane, z.B. Methan, Ethan, Propan oder Butan; Kohlenmonoxid; Kohlendioxid; oder Phosgen.

Flüssige anorganische Materialien sind beispielsweise Wasser, chloriertes Trinkwasser oder wässrige Salzlösungen, z.B. Kochsalz-Lösung (Sole) oder Natriumsulfat-Lösung; Brom; Säurehalogenide, z.B. Titantetrachlorid, Thionylchlorid, Nitrosylchlorid oder Trimethylsilylchlorid; Laugen, z.B. wässrige Natronlauge (NaOH), wässrige Kalilauge (KOH), wässrige Ammoniak-Lösung, wässrige Natriumbicarbonat-Lösung oder wässrige Soda-Lösung.

Flüssige organische Materialien sind beispielsweise organische Lösungsmittel oder flüssige organische Reagenzien.

Organische Lösungsmittel sind beispielsweise aliphatische Kohlenwasserstoffe, z.B. Pentan, Hexan, Heptan, Octan, Benzin, Nonan, oder Decan; Alkohole, z.B. Methanol, Ethanol, Isopropanol, Butanol, Pentanol, Amylalkohol, Cyclohexanol, Pentaerythrit, Ethylenglykol, Ethylendiglykol, Methylcellosolve, Polyethylenglykol oder Glycerin; Ketone, z.B. Aceton, Diethylketon, Methylethylketon, Diphenylether oder Cyclohexanon; Ether, z.B. Diethylether, Dibutylether, Tetrahydrofuran oder Dioxan; aromatische Kohlenwasserstoffe, z.B. Benzol, Toluol oder Xylol; heterocyclische Lösungsmittel, z.B. Furan, Pyridin, 2,6-Lutidin oder Thiophen; dipolar aprotische Lösungsmittel, z.B. Dimethylformamid, Diethylacetamid oder Acetonitril; oder Tenside.

Extrahierende Medien gemäss der vorliegenden Erfindung bedeuten auch Mischungen und Lösungen, insbesondere wässrige Mischungen, Emulsionen oder Lösungen, von flüssigen oder gasförmigen anorganischen und organischen Materialien gemäss obiger Aufzählung.

Von besonderem Interesse sind diejenigen extrahierenden Medien, die in der chemischen Industrie oder in Abfalldeponien von Bedeutung sind.

Eine bevorzugte Ausführungsform der vorliegenden Erfindung ist daher die Verwendung einer Verbindung vom Typ der Benzofuran-2-one zur Verbesserung der Beständigkeit von Polyolefinen, die im Dauerkontakt mit extrahierenden Medien sind; mit der Bedingung, dass die Polyolefine keine durch Rotomolding erhaltene Polyolefin-Formkörper bedeuten. Die folgenden Beispiele erläutern die Erfindung weiter. Angaben in Teilen oder Prozenten beziehen sich auf das Gewicht.

### Beispiel 1: Stabilisierung von Polyethylen, welches im Dauerkonkakt mit Wasser steht.

Zu einem direkt aus dem Reaktor entnommenen Polyethylen-Polymerisat (Hostalen® CRP 100; PE-HD) werden 0,1 Gew.-% Calciumstearat und die in der Tabellen aufgelisteten Stabilisatoren trocken gegeben und in einem Pappenmaiermischer (Typ 20) während zwei Minuten eingearbeitet.

In einem Extruder der Firma Schwabenthan wird das stabilisierte Polyethylen homogenisiert und zu Granulat verarbeitet. Für die Extraktionsversuche in Wasser werden aus dem Granulat der einzelnen Formulierungen (Beispiele 1a und 1b) unter Verwendung einer Tischpresse 200 mm mal 150 mm mal 2 mm grosse Prüfplatten gepresst. Damit die Entformbarkeit der Prüfplatten erleichtert wird, erfolgt der Pressvorgang zwischen zwei Aluminiumfolien.

Die Stabilisatorextraktionsversuche werden mit deionisiertem Wasser durchgeführt. Die Temperierung der Extraktionsbehälter erfolgt im Umluftofen der Firma Heraeus (Hanau, Deutschland) mit einer maximalen Temperaturabweichung von 1,5°C. Für die Extraktionsversuche unter dem Siedepunkt des Wassers wie beispielsweise 80°C werden Glasgefässe verwendet. Wegen der Gefahr einer Stabilisatorübersättigung des Wassers wird die Flüssigkeitsmenge für die Versuche mit ca. 400 ml bei ca. 70 g Polymer festgelegt und das Waser in regelmässigen Zeitabständen, und zwar nach jeder Probenentnahme, durch Frischwasser ersetzt.

Die Prüfplatten werden während 50 Tagen bei 80°C den oben beschriebenen Versuchsbedingungen ausgesetzt. Nach Abschluss der Extraktionsversuche werden von den Prüfplatten der Stabilisator-Restgehalt und die Oxidationsinduktionszeit bestimmt.

Die Bestimmung des Restgehalts des sterisch gehinderten Phenols, Irganox®1010, erfolgt unter Zuhilfenahme eines internen Standards in einem HPLC-Gerät des Typs Spectra Physics SP 8800 mit Autosampler und UVNIS-Detektor vom Typ Spectra 200. Die Chromatographie wird bei Raumtemperatur mit einer Säule vom Typ Hyperchrome 125 x 4,6 mm, die mit Nucleosil C 185 µm gefülllt ist, durchgeführt. Das Einspritzvolumen beträgt 14 µl bei einem Durchfluss von 1,5ml/Minute. Die UV-Detektion erfolgt bei 270 nm.

Die Bestimmung der Oxidationsinduktionszeit erfolgt mittels einem "DuPont-lnstrument 910 Differential Scanning Calorimeter" der Firma TA Instruments (Alzenau, Deutschland) und mit einer Probenmenge von 5 bis 10 mg und beschreibt die Zeitdauer in Minuten bei konstanter thermischer Belastung (190°C/O₂) bis zur einsetzenden vollständigen Zersetzung der Polyethylenprobe. Je länger die Oxidationsinduktionszeit ist, desto besser ist das Polyethylen stabilisiert und desto stabiler ist das Polyethylen gegenüber extrahierendem Wasser, welches im Dauerkontakt mit dem Polyethylen steht.

Die Resultate zeigen, dass die Beständigkeit von Polyolefinen, die im Dauerkontakt mit extrahierenden Medien sind, verbessert wird, wenn sie als Stabilisator eine Verbindung vom Typ der Benzofuran-2-one enthalten. Die Resultate sind in der Tabelle 1 zusammengefasst.

**Tabelle 1:**

| Wasserlagerung während 50 Tagen bei 80°C | | | |
|---|---|---|---|
| Beispiel | Stabilisator | Stabilisator-Restgehalt nach 50 Tagen bei 80°C | Oxidationsinduktionszeit in Minuten |
| 1a^{a)} | 0,10 % Irganox®1010^{c)} 0,10 % Irgafos®168^{d)} | 52 % Irganox®1010^{c)} | 34 |
| 1b^{b)} | 0,10 % Irganox®1010^{c)} 0,05 % Irgafos®168^{d)} 0,05 % Verbindung (101)^{e)} | 56 % Irganox®1010^{c)} | 38 |

| | | | |
|---|---|---|---|
| a) Vergleichsbeispiel. | | | |
| b) Erfindungsgemässes Beispiel. | | | |
| c) Irganox®1010 (Ciba Spezialitätenchemie AG) bedeutet den Pentaerythritester der 3-(3,5-Di-tert-butyl-4-hydroxyphenyl)propionsäure (Verbindung der Formel (3)). | | | |
| d) Irgafos®168 (Ciba Spezialitätenchemie AG) bedeutet Tris(2,4-di-tert-butylphenyl)phosphit. | | | |
| e) Die Verbindung (101) ist ein Gemisch von ca. 85 Gewichtsteilen der Verbindung der Formel Va und ca. 15 Gewichtsteilen der Verbindung der Formel Vb. | | | |

## Patentansprüche

1. Zusammensetzung, enthaltend
a) ein dickschichtiger Polyolefinformkörper, der im Dauerkontakt mit extrahierenden Medien steht, und
b) mindestens eine Verbindung vom Typ der Benzofuran-2-one; mit der Bedingung, dass die Komponente (a) keinen durch Rotomolding erhaltenen Polyolefinformkörper bedeutet.

2. Zusammensetzung gemäss Anspruch 1, worin die Komponente (b) eine Verbindung der Formel I 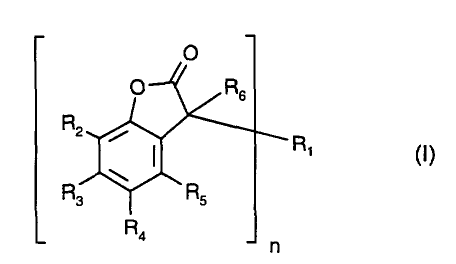 ist, worin, wenn n 1 ist,
R₁ unsubstituiertes oder mit C₁-C₄-Alkyl, C₁-C₄-Alkoxy, C₁-C₄-Alkylthio, Hydroxy, Halogen, Amino, C₁-C₄-Alkylamino, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]thienyl, Naphtho[2,3-b]thienyl, Thianthrenyl, Dibenzofuryl, Chromenyl, Xanthenyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phtalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl darstellt, oder R₁ einen Rest der Formel II 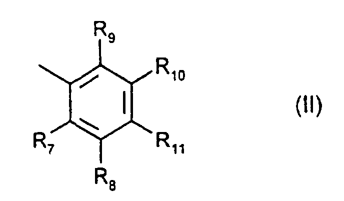 bedeutet, und
wenn n 2 ist,
R₁ unsubstituiertes oder mit C₁-C₄-Alkyl oder Hydroxy substituiertes Phenylen oder Naphthylen; oder -R₁₂-X-R₁₃- darstellt,
R₂, R₃, R₄ und R₅ unabhängig voneinander Wasserstoff, Chlor, Hydroxy, C₁-C₂₅-Alkyl, C₇-C₉-Phenylalkyl, unsubstituiertes oder durch C₁-C₄-Alkyl substituiertes Phenyl; unsubstituiertes oder durch C₁-C₄-Alkyl substituiertes C₅-C₈-Cycloalkyl; C₁-C₁₈-Alkoxy, C₁-C₁₈-Alkylthio, C₁-C₄-Alkylamino, Di-(C₁-C₄-alkyl)amino, C₁-C₂₅-Alkanoyloxy, C₁-C₂₅-Alkanoylamino, C₃-C₂₅-Alkenoyloxy, durch Sauerstoff, Schwefel oder 〉N―R₁₄ unterbrochenes C₃-C₂₅-Alkanoyloxy; C₆-C₉-Cycloalkylcarbonyloxy, Benzoyloxy oder durch C₁-C₁₂-Alkyl substituiertes Benzoyloxy darstellen; oder ferner die Reste R₂ und R₃ oder die Reste R₃ und R₄ oder die Reste R₄ und R₅ zusammen mit den Kohlenstoffatomen, an die sie gebunden sind, einen Benzoring bilden, R₄ zusätzlich -(CH₂)ₚ-COR₁₅ oder -(CH₂)_{q}OH darstellt, oder wenn R₃, R₅ und R₆ Wasserstoff sind, R₄ zusätzlich einen Rest der Formel III 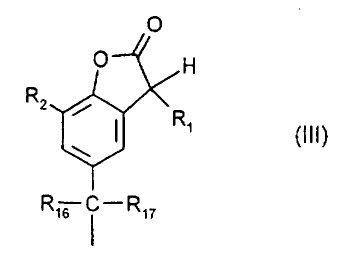 bedeutet, worin R₁ wie oben für n = 1 angegeben definiert ist,
R₆ Wasserstoff oder einen Rest der Formel IV 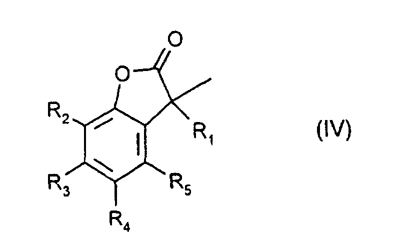 darstellt, wobei R₄ nicht einen Rest der Formel III bedeutet und R₁ wie oben für n = 1 angegeben definiert ist,
R₇, R₈, R₉, R₁₀ und R₁₁ unabhängig voneinander Wasserstoff, Halogen, Hydroxy, C₁-C₂₅-Alkyl, durch Sauerstoff, Schwefel oder 〉N―R₁₄ unterbrochenes C₂-C₂₅-Alkyl; C₁-C₂₅-Alkoxy, durch Sauerstoff, Schwefel oder 〉N―R₁₄ unterbrochenes C₂-C₂₅-Alkoxy; C₁-C₂₅-Alkylthio, C₃-C₂₅-Alkenyl, C₃-C₂₅-Alkenyloxy, C₃-C₂₅-Alkinyl, C₃-C₂₅-Alkinyloxy, C₇-C₉-Phenylalkyl, C₇-C₉-Phenylalkoxy, unsubstituiertes oder durch C₁-C₄-Alkyl substituiertes Phenyl; unsubstituiertes oder durch C₁-C₄-Alkyl substituiertes Phenoxy; unsubstituiertes oder durch C₁-C₄-Alkyl substituiertes C₅-C₈-Cycloalkyl; unsubstituiertes oder durch C₁-C₄-Alkyl substituiertes C₅-C₈-Cycloalkoxy; C₁-C₄-Alkylamino, Di-(C₁-C₄-alkyl)amino, C₁-C₂₅-Alkanoyl, durch Sauerstoff, Schwefel oder 〉N―R₁₄ unterbrochenes C₃-C₂₅-Alkanoyl; C₁-C₂₅-Alkanoyloxy, durch Sauerstoff, Schwefel oder 〉N―R₁₄ unterbrochenes C₃-C₂₅-Alkanoyloxy; C₁-C₂₅-Alkanoylamino, C₃-C₂₅-Alkenoyl, durch Sauerstoff, Schwefel oder 〉N―R₁₄ unterbrochenes C₃-C₂₅-Alkenoyl; C₃-C₂₅-Alkenoyloxy, durch Sauerstoff, Schwefel oder 〉N―R₁₄ unterbrochenes C₃-C₂₅-Alkenoyloxy; C₆-C₉-Cycloalkylcarbonyl, C₆-C₉-Cycloalkylcarbonyloxy, Benzoyl oder durch C₁-C₁₂-Alkyl substituiertes Benzoyl; Benzoyloxy oder durch C₁-C₁₂-Alkyl substituiertes Benzoyloxy; 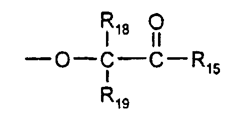 oder 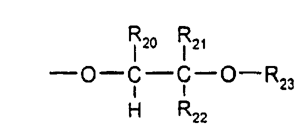 darstellen, oder ferner in Formel II die Reste R₇ und R₈ oder die Reste R₈ und R₁₁ zusammen mit den Kohlenstoffatomen, an die sie gebunden sind, einen Benzoring bilden,
R₁₂ und R₁₃ unabhängig voneinander unsubstituiertes oder durch C₁-C₄-Alkyl substituiertes Phenylen oder Naphthylen darstellen,
R₁₄ Wasserstoff oder C₁-C₈-Alkyl ist,
R₁₅ Hydroxy, 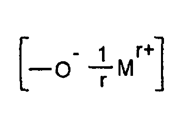 C₁-C₁₈-Alkoxy oder 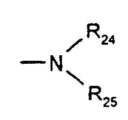 bedeutet,
R₁₆ und R₁₇ unabhängig voneinander Wasserstoff, CF₃, C₁-C₁₂-Alkyl oder Phenyl darstellen, oder R₁₆ und R₁₇ zusammen mit dem C-Atom, an das sie gebunden sind, einen unsubstituierten oder durch 1 bis 3 C₁-C₄-Alkyl substituierten C₅-C₈-Cycloalkylidenring bilden;
R₁₈ und R₁₉ unabhängig voneinander Wasserstoff, C₁-C₄-Alkyl oder Phenyl darstellen,
R₂₀ Wasserstoff oder C₁-C₄-Alkyl ist,
R₂₁ Wasserstoff, unsubstituiertes oder durch C₁-C₄-Alkyl substituiertes Phenyl; C₁-C₂₅-Alkyl, durch Sauerstoff, Schwefel oder 〉N―R₁₄ unterbrochenes C₂-C₂₅-Alkyl; unsubstituiertes oder am Phenylrest durch 1 bis 3 C₁-C₄-Alkyl substituiertes C₇-C₉-Phenylalkyl; durch Sauerstoff, Schwefel oder 〉N―R₁₄ unterbrochenes unsubstituiertes oder am Phenylrest durch 1 bis 3 C₁-C₄-Alkyl substituiertes C₇-C₂₅-Phenylalkyl bedeutet, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten C₅-C₁₂-Cycloalkylenring bilden;
R₂₂ Wasserstoff oder C₁-C₄-Alkyl darstellt,
R₂₃ Wasserstoff, C₁-C₂₅-Alkanoyl, C₃-C₂₅-Alkenoyl, durch Sauerstoff, Schwefel oder 〉N―R₁₄ unterbrochenes C₃-C₂₅-Alkanoyl; durch eine Di(C₁-C₆-alkyl)phosphonatgruppe substituiertes C₂-C₂₅-Alkanoyl; C₆-C₉-Cycloalkylcarbonyl, Thenoyl, Furoyl, Benzoyl oder durch C₁-C₁₂-Alkyl substituiertes Benzoyl; 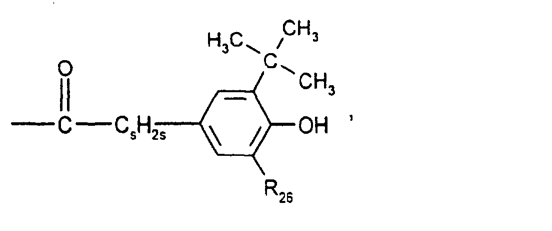 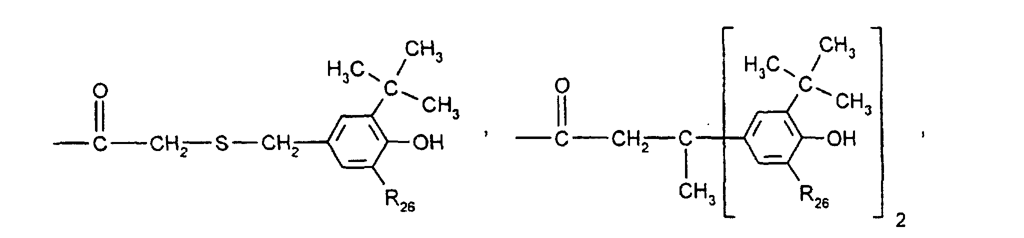 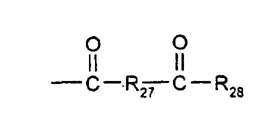 oder 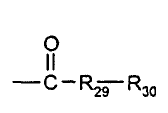 bedeutet,
R₂₄ und R₂₅ unabhängig voneinander Wasserstoff oder C₁-C₁₈-Alkyl darstellen,
R₂₆ Wasserstoff oder C₁-C₈-Alkyl darstellt,
R₂₇ eine direkte Bindung, C₁-C₁₈-Alkylen, durch Sauerstoff, Schwefel oder 〉N―R₁₄ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen, 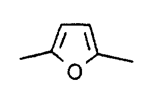 oder 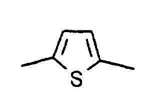 darstellt,
R₂₈ Hydroxy, 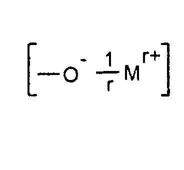 C₁-C₁₈-Alkoxy oder 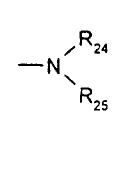 bedeutet,
R₂₉ Sauerstoff, -NH- oder 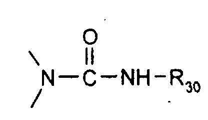 darstellt,
R₃₀ C₁-C₁₈-Alkyl oder Phenyl ist,
R₃₁ Wasserstoff oder C₁-C₁₈-Alkyl bedeutet,
M ein r-wertiges Metallkation ist,
X eine direkte Bindung, Sauerstoff, Schwefel oder -NR₃₁- darstellt,
n 1 oder 2 ist,
p 0, 1 oder 2 bedeutet,
q 1, 2, 3, 4, 5 oder 6 darstellt,
r 1, 2 oder 3 ist, und
s 0, 1 oder 2 bedeutet.

3. Zusammensetzung gemäss Anspruch 1, worin die Komponente (b) eine Verbindung der Formel V 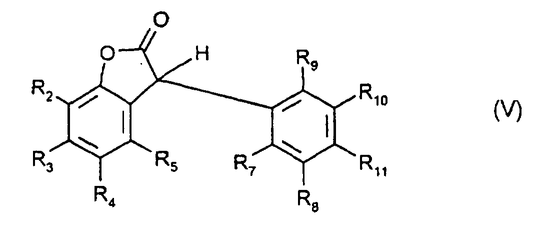 ist, worin
R₂ Wasserstoff oder C₁-C₆-Alkyl darstellt,
R₃ Wasserstoff bedeutet,
R₄ Wasserstoff oder C₁-C₆-Alkyl darstellt,
R₅ Wasserstoff bedeutet,
R₇, R₈, R₉, R₁₀ und R₁₁ unabhängig voneinander Wasserstoff, C₁-C₄-Alkyl oder C₁-C₄-Alkoxy darstellt, mit der Bedingung, dass mindestens zwei der Reste R₇, R₈, R₉, R₁₀ oder R₁₁ Wasserstoff sind.

4. Zusammensetzung gemäss Anspruch 1, worin die Komponente (b) eine Verbindung der Formel Va oder Vb 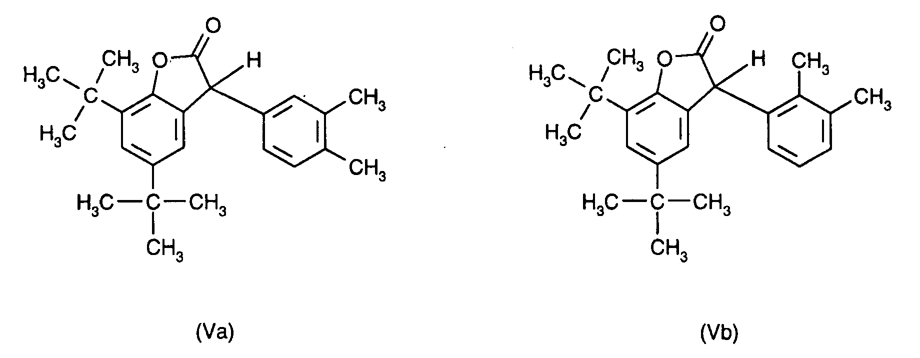 darstellt, oder ein Gemisch der beiden Verbindungen der Formel Va und Vb bedeutet.

5. Zusammensetzung gemäss Anspruch 1, worin der dickschichtige Polyolefinformkörper eine Schichtdicke von 1 bis 50 mm aufweist.

6. Zusammensetzung gemäss Aspruch 1, worin der dickschichtige Polyolefinformkörper Polyolefin-Rohre oder Polyolefin-Geomembrane darstellt.

7. Zusammensetzung gemäss Anspruch 1, worin das Polyolefin Polyethylen oder Polypropylen und deren Copolymere mit Mono- und Diolefinen bedeutet.

8. Zusammensetzung gemäss Anspruch 1, worin das extrahierende Medium ein flüssiges oder gasformiges anorganisches oder organisches Material ist.

9. Zusammensetzung gemäss Anspruch 1, worin die Komponente (b) in einer Menge von 0,0005 bis 5 % bezogen auf das Gewicht der Komponente (a) vorliegt.

10. Zusammensetzung gemäss Anspruch 1, enthaltend neben den Komponenten (a) und (b) zusätzlich weitere Additive.

11. Zusammensetzung gemäss Anspruch 10, enthaltend als weiteres Additiv mindestens eine Verbindung aus der Gruppe der phenolischen Antioxidantien.

12. Zusammensetzung gemäss Anspruch 10, enthaltend als weiteres Additiv mindestens eine Verbindung aus der Gruppe der organischen Phosphite oder Phosphonite.

13. Verfahren zum Stabilisieren von Polyolefinen, die im Dauerkontakt mit extrahierenden Medien sind, **dadurch gekennzeichnet, dass** man diesen mindestens eine Komponente (b) gemäss Anspruch 1 einverleibt oder auf diese aufbringt; mit der Bedingung, dass die Polyolefine keine durch Rotomolding erhaltene Polyolefinformkörper bedeuten.

14. Verfahren gemäss Anspruch 13, worin die Polyolefine dickschichtige Polyolefinformkörper darstellen.

15. Verfahren gemäss Anspruch 14, worin die dickschichtigen Polyolefinformkörper eine Schichtdicke von 1 bis 50 mm aufweisen.

16. Verfahren gemäss Anspruch 14, worin die dickschichtigen Polyolefinformkörper Polyolefin-Rohre oder Polyolefin-Geomembrane darstellen.

17. Verwendung einer Verbindung vom Typ der Benzofuran-2-one zur Verbesserung der Beständigkeit von Polyolefinen, die im Dauerkontakt mit extrahierenden Medien sind; mit der Bedingung, dass die Polyolefine keine durch Rotomolding erhaltene Polyolefinformkörper bedeuten.

## Claims

1. A composition comprising
a) a thick-layered polyolefin moulding which is in permanent contact with extracting media, and
b) at least one benzofuran-2-one type compound, with the proviso that component (a) is not a rotomoulding.

2. A composition according to claim 1, wherein component (b) is a compound of formula I 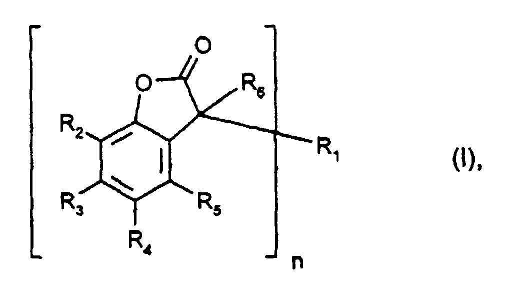 in which, if n is 1,
R₁ is naphthyl, phenanthryl, anthryl, 5,6,7,8-tetrahydro-2-naphthyl, 5,6,7,8-tetrahydro-1-naphthyl, thienyl, benzo[b]thienyl, naphtho[2,3-b]thienyl, thianthrenyl, dibenzofuryl, chromenyl, xanthenyl, phenoxathiinyl, pyrrolyl, imidazolyl, pyrazolyl, pyrazinyl, pyrimidinyl, pyridazinyl, indolizinyl, isoindolyl, indolyl, indazolyl, purinyl, quinolizinyl, isoquinolyl, quinolyl, phthalazinyl, naphthyridinyl, quinoxalinyl, quinazolinyl, cinnolinyl, pteridinyl, carbazolyl, β-carbolinyl, phenanthridinyl, acridinyl, perimidinyl, phenanthrolinyl, phenazinyl, isothiazolyl, phenothiazinyl, isoxazolyl, furazanyl, biphenyl, terphenyl, fluorenyl or phenoxazinyl, which are unsubstituted or substituted by C₁-C₄alkyl, C₁-C₄alkoxy, C₁-C₄alkylthio, hydroxyl, halogen, amino, C₁-C₄alkylamino, phenylamino or di(C₁-C₄alkyl)amino, or R₁ is a radical of formula II 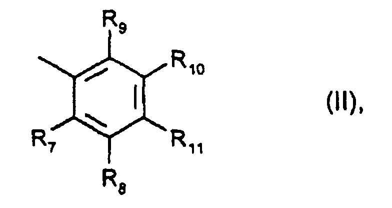
and
if n is 2,
R₁ is unsubstituted or C₁-C₄alkyl- or hydroxy-substituted phenylene or naphthylene; or -R₁₂-X-R₁₃-,
R₂, R₃, R₄ and R₅ are each independently of one another hydrogen, chloro, hydroxy, C₁-C₂₅-alkyl, C₇-C₉phenylalkyl, unsubstituted or C₁-C₄alkyl-substituted phenyl; unsubstituted or C₁-C₄alkyl-substituted C₅-C₈cycloalkyl; C₁-C₁₈alkoxy, C₁-C₁₈alkylthio, C₁-C₄alkylamino, di(C₁-C₄-alkyl)amino, C₁-C₂₅alkanoyloxy, C₁-C₂₅alkanoylamino, C₃-C₂₅alkenoyloxy; C₃-C₂₅alkanoyloxy which is interrupted by oxygen, sulfur or 〉N―R₁₄; C₆-C₉cycloalkylcarbonyloxy, benzoyloxy or C₁-C₁₂alkyl-substituted benzoyloxy; or R₂ and R₃, or R₃ and R₄, or R₄ and R₅, together with the carbon atoms to which they are attached, form a benzo ring, R₄ is additionally -(CH₂)ₚ-COR₁₅ or -(CH₂)_{q}OH or, if R₃, R₅ and R₆ are hydrogen, R₄ is additionally a radical of formula III 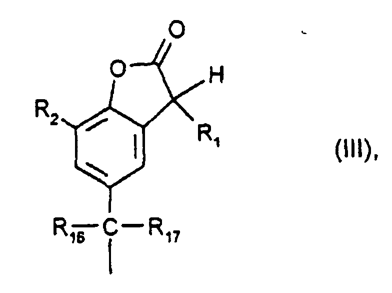
in which R₁ is as defined above for n = 1,
R₆ is hydrogen or a radical of formula IV 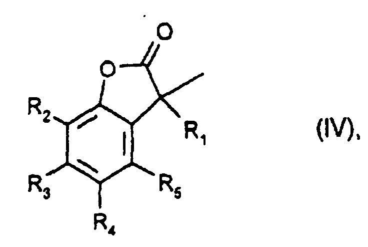 where R₄ is not a radical of formula III, and R₁ is as defined above for n = 1,
R₇, R₈, R₉, R₁₀ and R₁₁ are each independently of one another hydrogen, halogen, hydroxy, C₁-C₂₅alkyl; C₂-C₂₅alkyl which is interrupted by oxygen, sulfur or 〉N―R₁₄; C₁-C₂₅alkoxy; C₂-C₂₅alkoxy which is interrupted by oxygen, sulfur or 〉N―R₁₄; C₁-C₂₅alkylthio, C₃-C₂₅alkenyl, C₃-C₂₅alkenyloxy, C₃-C₂₅alkynyl, C₃-C₂₅alkynyloxy, C₇-C₉phenylalkyl, C₇-C₉phenylalkoxy, unsubstituted or C₁-C₄alkyl-substituted phenyl; unsubstituted or C₁-C₄alkyl-substituted phenoxy; unsubstituted or C₁-C₄alkyl-substituted C₅-C₈cycloalkyl; unsubstituted or C₁-C₄alkyl-substituted C₅-C₈cycloalkoxy; C₁-C₄alkylamino, di(C₁-C₄alkyl)amino, C₁-C₂₅alkanoyl; C₃-C₂₅alkanoyl which is interrupted by oxygen, sulfur or 〉N―R₁₄; C₁-C₂₅alkanoyloxy, C₃-C₂₅alkanoyloxy which is interrupted by oxygen, sulfur or 〉N―R₁₄; C₁-C₂₅alkanoylamino, C₃-C₂₅alkenoyl; C₃-C₂₅alkenoyl which is interrupted by oxygen, sulfur or 〉N―R₁₄; C₃-C₂₅alkenoyloxy; C₃-C₂₅alkenoyloxy which is interrupted by oxygen, sulfur or 〉N―R₁₄; C₆-C₉cycloalkylcarbonyl, C₆-C₉cycloalkylcarbonyloxy, benzoyl or C₁-C₁₂alkyl-substituted benzoyl; benzoyloxy or C₁-C₁₂alkyl-substituted benzoyloxy; 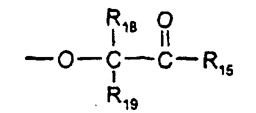 or 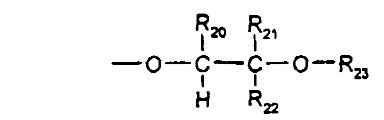 or, in formula II, R₇ and R₈, or
R₈ and R₁₁, together with the carbon atoms to which they are attached, form a benzo ring,
R₁₂ and R₁₃ are each independently of the other unsubstituted or C₁-C₄alkyl-substituted phenylene or naphthylene,
R₁₄ is hydrogen or C₁-C₈alkyl,
R₁₅ is hydroxy, 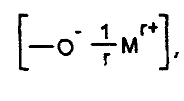 C₁-C₁₈alkoxy or 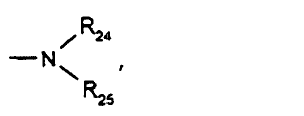
R₁₆ and R₁₇ are each independently of the other hydrogen, CF₃, C₁-C₁₂alkyl or phenyl, or R₁₆ and R₁₇, together with the carbon atom to which they are attached, form a C₅-C₈cycloalkylidene ring which is unsubstituted or substituted by 1 to 3 C₁-C₄alkyl;
R₁₈ and R₁₉ are each independently of the other hydrogen, C₁-C₄alkyl or phenyl,
R₂₀ is hydrogen or C₁-C₄alkyl,
R₂₁ is hydrogen, unsubstituted or C₁-C₄alkyl-substituted phenyl; C₁-C₂₅alkyl; C₂-C₂₅alkyl which is interrupted by oxygen, sulfur or 〉N―R₁₄; C₇-C₉phenylalkyl which is unsubstituted or substituted on the phenyl moiety by 1 to 3 C₁-C₄alkyl; C₇-C₂₅phenylalkyl which is interrupted by oxygen, sulfur or 〉N―R₁₄ and which is unsubstituted or substituted on the phenyl moiety by 1 to 3 C₁-C₄alkyl, or R₂₀ and R₂₁, together with the carbon atoms to which they are attached, form a C₅-C₁₂cycloalkylene ring which is unsubstituted or substituted by 1 to 3 C₁-C₄alkyl;
R₂₂ is hydrogen or C₁-C₄alkyl,
R₂₃ is hydrogen, C₁-C₂₅alkanoyl, C₃-C₂₅alkenoyl, sulfur or 〉N―R₁₄; C₂-C₂₅alkanoyl which is substituted by a di(C₁-C₆alkyl)phosphonate group; C₆-C₉cycloalkylcarbonyl, thenoyl, furoyl, benzoyl or C₁-C₁₂alkyl-substituted benzoyl: 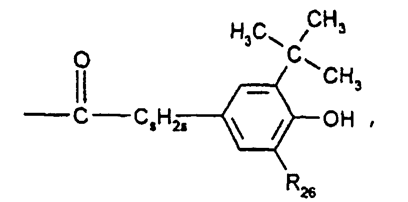 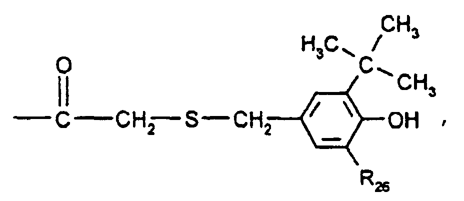 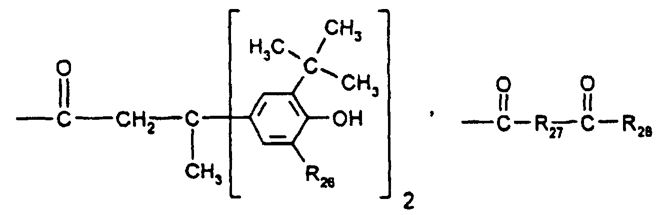 or 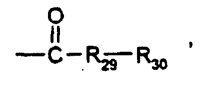
R₂₄ and R₂₅ are each independently of the other hydrogen or C₁-C₁₈alkyl,
R₂₆ is hydrogen or C₁-C₈alkyl,
R₂₇ is a direct bond, C₁-C₁₈alkylene; C₂-C₁₈alkylene which is interrupted by oxygen, sulfur or 〉N―R₁₄; C₂-C₁₈alkenylene, C₂-C₂₀alkylidene, C₇-C₂₀phenylalkylidene, C₅-C₈cycloalkylene, C₇-C₈bicycloalkylene unsubstituted or C₁-C₄alkyl-substituted phenylene, 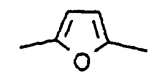 or 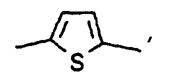
R₂₈ is hydroxy, 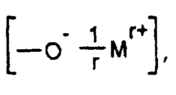 C₁-C₁₈alkoxy or 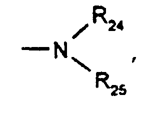
R₂₉ is oxygen, -NH- or 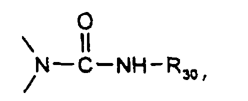
R₃₀ is C₁-C₁₈alkyl or phenyl,
R₃₁ is hydrogen or C₁-C₁₈alkyl,
M is an r-valent metal cation,
X is a direct bond, oxygen, sulfur or -NR₃₁-,
n is 1 or 2,
p is 0, 1, or 2,
q is 1, 2, 3, 4, 5 or 6,
r is 1, 2 or 3, and
s is 0, 1 or 2.

3. A composition according to claim 1, wherein component (b) is a compound of formula V 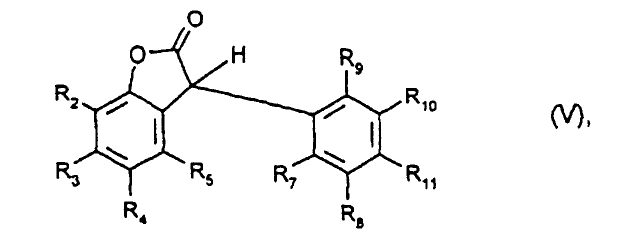 in which
R₂ is hydrogen or C₁-C₆alkyl,
R₃ is hydrogen,
R₄ is hydrogen or C₁-C₆alkyl,
R₅ is hydrogen,
R₇, R₈, R₉, R₁₀ and R₁₁ are each independently of one another hydrogen, C₁-C₄alkyl or C₁-C₄alkoxy, with the proviso that at least two of R₇, R₈, R₉, R₁₀ or R₁₁ are hydrogen.

4. A composition according to claim 1, wherein component (b) is a compound of formula Va or Vb 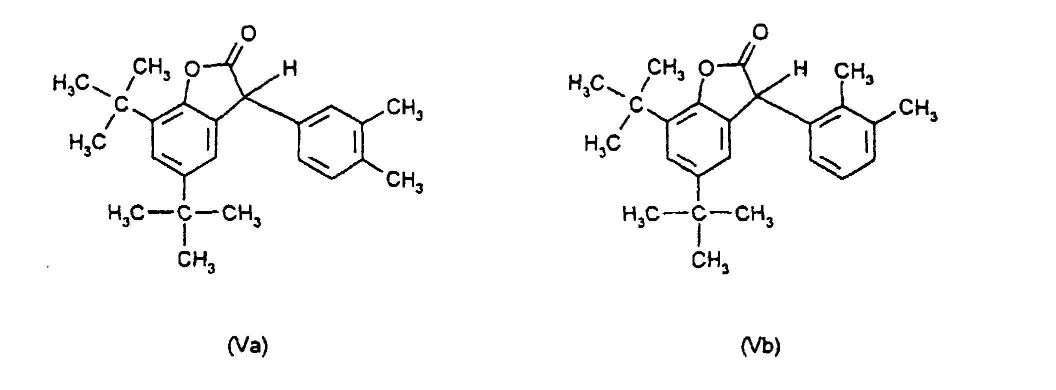 or a mixture of the two compounds of formula Va and Vb.

5. A composition according to claim 1, wherein the thick-layered polyolefin moulding has a layer thickness of 1 to 50 mm.

6. A composition according to claim 1, wherein the thick-layered polyolefin moulding is a polyolefin pipe or polyolefin geomembrane.

7. A composition according to claim 1, wherein the polyolefin is polyethylene or polypropylene and their copolymers with mono- and diolefins.

8. A composition according to claim 1, wherein the extracting medium is a liquid or gaseous organic or inorganic material.

9. A composition according to claim 1, wherein component (b) is present in an amount of 0.0005 to 5%, based on the weight of component (a).

10. A composition according to claim 1, comprising further additives in addition to components (a) and (b).

11. A composition according to claim 10, comprising as further additive at least one compound from the group of the phenolic antioxidants.

12. A composition according to claim 10, comprising as further additive at least one compound from the group of the organic phosphites or phosphonites.

13. A process for stabilising polyolefins which are in permanent contact with extracting media, which comprises incorporating in, or applying to, these polyolefins at least one component (b) according to claim 1, with the proviso that the polyolefins are not rotomouldings.

14. A process according to claim 13, wherein the polyolefins are thick-layered polyolefin mouldings.

15. A process according to claim 14, wherein the thick-layered polyolefin mouldings have a layer thickness of 1 to 50 mm.

16. A process according to claim 14, wherein the thick-layered polyolefin mouldings are polyolefin pipes or polyolefin geomembranes.

17. Use of a benzofuran-2-one type compound for improving the stability of polyolefins which are in permanent constant with extracting media; with the proviso that the polyolefins are not rotomouldings.

## Revendications

1. Composition contenant
a) un corps moulé polyoléfinique à couche épaisse qui est en contact permanent avec des milieux extractifs, et
b) au moins un composé de type benzofurane-2-ones ; à condition que le composant (a) ne soit pas un corps moulé polyoléfinique obtenu par rotomoulage.

2. Composition selon la revendication 1,
où le composant (b) est un composé de formule I 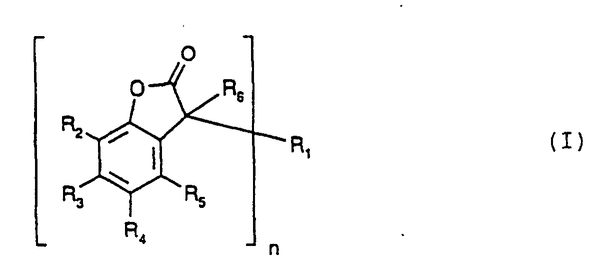 où, lorsque n vaut 1,
R₁ représente des groupes naphtyle, phénanthryle, anthryle, 5,6,7,8-tétrahydro-2-naphtyle, 5,6,7,8-tétrahydro-1-naphtyle, thiényle, benzo[b]thiényle, naphto-[2,3-b]thiényle, thianthrényle, dibenzofuryle, chroményle, xanthényle, phénoxathiinyle, pyrrolyle, imidazolyle, pyrazolyle, pyrazinyle, pyrimidinyle, pyridazinyle, indolizinyle, isoindolyle, indolyle, indazolyle, purinyle, quinolizinyle, isochinolyle, chinolyle, phtalazinyle, naphtyridinyle, quinoxalinyle, quinazolinyle, cinnolinyle, ptéridinyle, carbazolyle, β-carbolinyle, phénanthridinyle, acridinyle périmidinyle, phénanthrolinyle, phénazinyle, isothiazolyle, phénothiazinyle, isoxazolyle, furazanyle, biphényle, terphényle, fluorényle ou phénoxazinyle non substitué ou substitué par des substituants alkyle en C₁-C₄, alkoxy en C₁-C₄, (alkyl en C₁-C₄)thio, hydroxy, halogène, amino, (alkyl en C₁-C₄)amino, phénylamino ou di(alkyl en C₁-C₄)amino, ou R₁ représente un reste de formule II 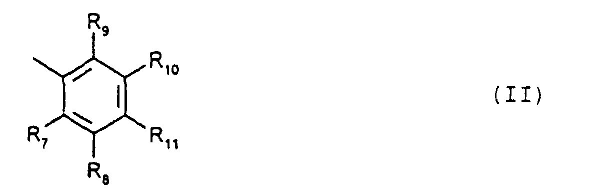
et
lorsque n vaut 2,
R₁ représente un groupe phénylène ou naphtylène non substitué ou substitué par des substituants alkyle en en C₁-C₄ ou hydroxy ; ou représente un groupe -R₁₂-X-R₁₃-,
R₂, R₃, R₄ et R₅ représentent, indépendamment les uns des autres, des atomes d'hydrogène, des atomes de chlore, des groupes hydroxy, alkyle en C₁-C₂₅, phénylalkyle en C₇-C₉, phényle non substitué ou substitué par un substituant alkyle en C₁-C₄ ; cycloalkyle en C₅-C₈ non substitué ou substitué par un substituant alkyle en C₁-C₄ ; alkoxy en C₁-C₁₈, (alkyl en C₁-C₁₈) thio, (alkyl en C₁-C₄)amino, di-(alkyl en C₁-C₄)amino, (alcanoyl en C₁-C₂₅)oxy, (alcanoyl en C₁-C₂₅)amino, (alcénoyl en C₃-C₂₅)oxy, (alcanoyl en C₃-C₂₅)oxy interrompu par un atome d'oxygène, un atome de soufre ou un groupe >N―R₁₄ ; cyclo(alkyl en C₆-C₉)-carbonyloxy, benzoyloxy ou benzoyloxy substitué par un substituant alkyle en C₁-C₁₂ ; ou de plus, les restes R₂ et R₃ ou les restes R₃ et R₄ ou les restes R₄ et R₅ forment, conjointement avec les atomes de carbone auxquels ils sont liés, un cycle benzo, R₄ représente de plus des groupes -(CH₂)ₚ-COR₁₅ ou -(CH₂)_{q}OH, ou lorsque R₃, R₅ et R₆ représentent des atomes d'hydrogène, R₄ représente de plus un reste de formule III 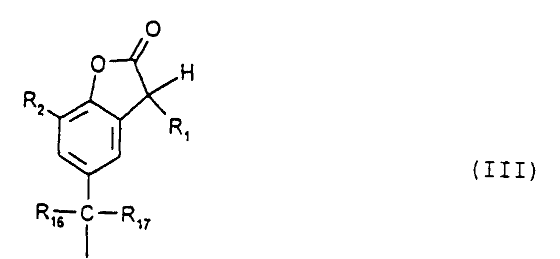 où R₁ est défini comme indiqué ci-dessus pour n = 1,
R₆ représente un atome d'hydrogène ou un reste de formule IV 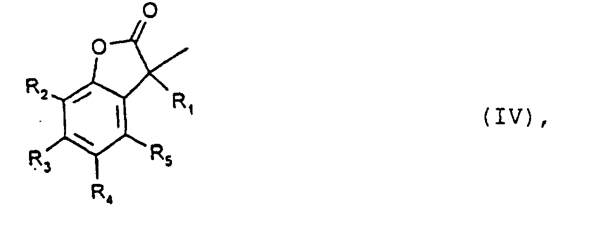 où R₄ ne représente pas un reste de formule III et R₁ est défini comme indiqué ci-dessus pour n = 1,
R₇, R₈, R₉, R₁₀ et R₁₁ représentent, indépendamment les uns des autres, des atomes d'hydrogène, des atomes d'halogènes, des groupes hydroxy, alkyle en C₁-C₂₅, alkyle en C₂-C₂₅ interrompu par un atome d'oxygène, un atome de soufre ou un groupe 〉N―R₁₄ ; alkoxy en C₁-C₂₅, alkoxy en C₂-C₂₅ interrompu par un atome d'oxygène, un atome de soufre ou un groupe 〉N―R₁₄ ; (alkyl en C₁-C₂₅) thio, alcényle en C₃-C₂₅, (alcényl en C₃-C₂₅)oxy, alcynyle en C₃-C₂₅, (alcynyl en C₃-C₂₅)oxy, phénylalkyle en C₇-C₉, phénylalkoxy en C₇-C₉, phényle non substitué ou substitué par un substituant alkyle en C₁-C₄ ; phénoxy non substitué ou substitué par un substituant alkyle en C₁-C₄ ; cycloalkyle en C₅-C₈ non substitué ou substitué par un substituant alkyle en C₁-C₄ ; cycloalkoxy en C₅-C₈ non substitué ou substitué par un substituant alkyle en C₁-C₄ ; (alkyl en C₁-C₄)-amino, di-(alkyl en C₁-C₄)amino, alcanoyle en C₁-C₂₅, alcanoyle en C₃-C₂₅ interrompu par un atome d'oxygène, un atome de soufre ou un groupe 〉N―R₁₄ ; (alcanoyl en C₁-C₂₅)oxy, (alcanoyl en C₃-C₂₅)oxy interrompu par un atome d'oxygène, un atome de soufre ou un groupe 〉N―R₁₄ ; (alcanoyl en C₁-C₂₅)amino, alcénoyle en C₃-C₂₅, alcénoyle en C₃-C₂₅ interrompu par un atome d'oxygène, un atome de soufre ou un groupe 〉N―R₁₄ ; (alcénoyl en C₃-C₂₅)oxy, (alcénoyl en C₃-C₂₅)oxy interrompu par un atome d'oxygène, un atome de soufre ou un groupe 〉N―R₁₄ ; cyclo(alkyl en C₆-C₉)carbonyle, cyclo(alkyl en C₆-C₉)carbonyloxy, benzoyle ou benzoyle substitué par un substituant alkyle en C₁-C₁₂ ; benzoyloxy ou benzoyloxy substitué par un substituant alkyle en C₁-C₁₂ ; 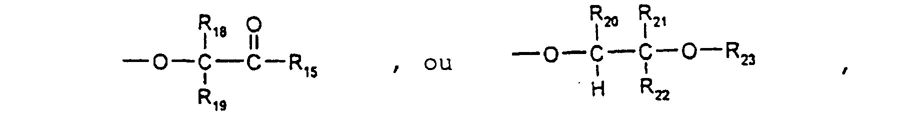 ou de plus, à la formule II, les restes R₇ et R₈ ou les restes R₈ et R₁₁ forment, conjointement avec les atomes de carbone auxquels ils sont liés, un cycle benzo, R₁₂ et R₁₃ représentent, indépendamment l'un de l'autre, des groupes phénylène ou naphtylène non substitué ou substitué par par un substituant alkyle en C₁-C₄,
R₁₄ représente un atome d'hydrogène ou un groupe alkyle en C₁-C₈ ;
R₁₅ représente des groupes hydroxy, 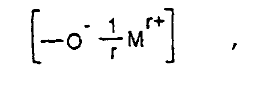 alkoxy en C₁-C₁₈ ou 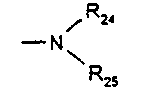
R₁₆ et R₁₇ représentent, indépendamment l'un de l'autre, des atomes d'hydrogène, des groupes CF₃, alkyle en C₁-C₁₂ ou phényle, ou R₁₆ et R₁₇ forment, conjointement avec l'atome de C auquel ils sont liés, un cycle cycloalkylidène en C₅-C₈ non substitué ou substitué par 1 à 3 groupes alkyle en C₁-C₄ ;
R₁₈ et R₁₉ représentent, indépendamment l'un de l'autre, des atomes d'hydrogène, des groupes alkyle en C₁-C₄ ou phényle,
R₂₀ représente un atome d'hydrogène ou un groupe alkyle en C₁-C₄,
R₂₁ représente un atome d'hydrogène ou des groupes phényle non substitué ou substitué par un substituant alkyle en C₁-C₄ ; alkyle en C₁-C₂₅, alkyle en C₂-C₂₅ interrompu par un atome d'oxygène, un atome de soufre ou un groupe 〉N―R₁₄ ; phénylalkyle en C₇-C₉ non substitué ou substitué sur le reste phényle par 1 à 3 substituants alkyle en C₁-C₄ ; phénylalkyle en C₇-C₂₅ non substitué interrompu par un atome d'oxygène, un atome de soufre ou un groupe 〉N―R₁₄ ou substitué sur le reste phényle par 1 à 3 substituants alkyle en C₁-C₄, ou de plus les restes R₂₀ et R₂₁ forment, conjointement avec les atomes de carbone auxquels ils sont liés, un cycle cycloalkylène en C₅-C₁₂ non substitué ou substitué par 1 à 3 substituants alkyle en C₁-C₁₂ ;
R₂₂ représente un atome d'hydrogène ou un groupe alkyle en C₁-C₄,
R₂₃ représente un atome d'hydrogène, des groupes alcanoyle en C₁-C₂₅, alcénoyle en C₃-C₂₅, alcanoyle en C₃-C₂₅ interrompu par un atome d'oxygène, un atome de soufre ou un groupe 〉N―R₁₄ ; alcanoyle en C₂-C₂₅ substitué par un groupe di(alkyl en C₁-C₆)phosphonato ; cyclo(alkyl en C₆-C₉)carbonyle, thénoyle, furoyle, benzoyle ou benzoyle substitué par un substituant alkyle en C₁-C₁₂ ; 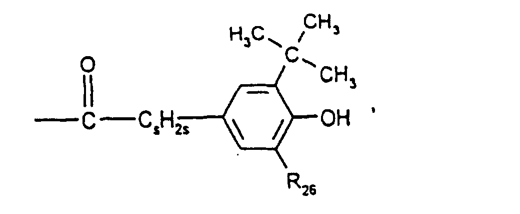 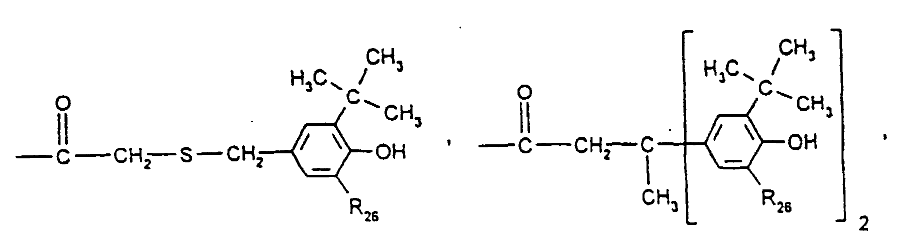 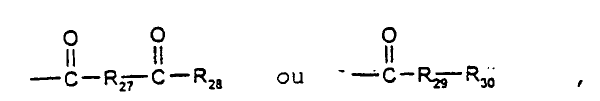
R₂₄ et R₂₅ représentent, indépendamment l'un de l'autre, un atome d'hydrogène ou un groupe alkyle en C₁-C₁₈,
R₂₆ représente un atome d'hydrogène ou un groupe alkyle en C₁-C₈,
R₂₇ représente une liaison directe, des groupes alkylène en C₁-C₁₈, alkylène en C₂-C₁₈ interrompu par un atome d'oxygène, un atome de soufre ou un groupe 〉N―R₁₄ ; alcénylène en C₂-C₁₈, alkylidène en C₂-C₂₀, phénylalkylidène en C₇-C₂₀, cycloalkylène en C₅-C₈, bicycloalkylène en C₇-C₈, phénylène non substitué ou substitué par des substituants alkyle en C₁-C₄, 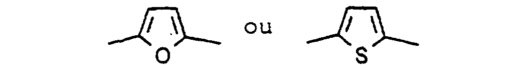
R₂₈ représente des groupes hydroxy, 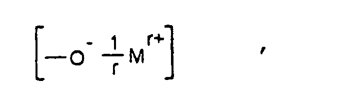 alkoxy en C₁-C₁₈ ou 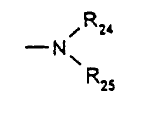
R₂₉ représente un atome d'oxygène, des groupes -NH- ou 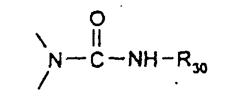
R₃₀ représente des groupes alkyle en C₁-C₁₈ ou phényle,
R₃₁ représente un atome d'hydrogène ou un groupe alkyle en C₁-C₁₈,
M représente un cation métal r-valent,
X représente une liaison directe, un atome d'oxygène, un atome de soufre ou un groupe -NR₃₁-,
n vaut 1 ou 2,
p vaut 0, 1 ou 2,
q vaut 1, 2, 3, 4, 5 ou 6,
r vaut 1, 2 ou 3, et
s vaut 0, 1 ou 2.

3. Composition selon la revendication 1, où le composant (b) représente un composé de formule V 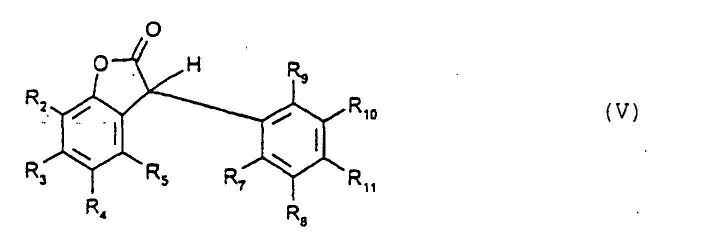 où
R₂ représente un atome d'hydrogène ou un groupe alkyle en C₁-C₆,
R₃ représente un atome d'hydrogène,
R₄ représente un atome d'hydrogène ou un groupe alkyle en C₁-C₆,
R₅ représente un atome d'hydrogène,
R₇, R₈, R₉, R₁₀ et R₁₁ représentent, indépendamment les uns des autres, des atomes d'hydrogène, des groupes alkyle en C₁-C₄ ou alkoxy en C₁-C₄, à condition qu'au moins deux des restes R₇, R₈, R₉, R₁₀ et R₁₁ représentent des atomes d'hydrogène.

4. Composition selon la revendication 1, où le composant (b) est un composé de formule Va ou Vb 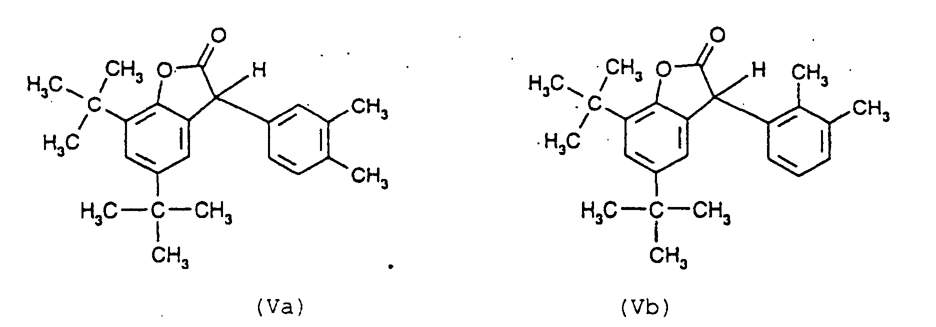 ou un mélange des deux composés de formule Va et Vb.

5. Composition selon la revendication 1, où le corps moulé polyoléfinique présente une épaisseur de couche de 1 à 50 mm.

6. Composition selon la revendication 1, où le corps moulé polyoléfinique représente des tuyaux de polyoléfines ou des géomembranes polyoléfiniques.

7. Composition selon la revendication 1, où la polyoléfine est le polyéthylène ou le polypropylène et leurs copolymères avec des mono- et dioléfines.

8. Composition selon la revendication 1, où le milieu extractif est une matière organique ou inorganique liquide ou gazeuse.

9. Composition selon la revendication 1, où le composant (b) est présent dans une quantité de 0,0005 à 5 % par rapport au poids du composant (a).

10. Composition selon la revendication 1, contenant en plus, au côté des composants (a) et (b), d'autres additifs.

11. Composition selon la revendication 1, contenant en tant qu'autre additif au moins un composé pris dans le groupe des antioxydants phénoliques.

12. Composition selon la revendication 1 contenant, en tant qu'autre additif, au moins un composé pris dans le groupe des phosphites ou phosphonites organiques.

13. Procédé pour la stabilisation de polyoléfines, qui sont en contact permanent avec des milieux extractifs, **caractérisé en ce qu'**on leur incorpore ou on leur applique par dépôt au moins un composant (b) selon la revendication 1 ; à condition que les polyoléfines ne soient pas des corps moulés polyoléfiniques obtenus par rotomoulage.

14. Procédé selon la revendication 13, où les polyoléfines représentent des corps moulés polyoléfiniques à couche épaisse.

15. Procédé selon la revendication 14, où les corps moulés polyoléfiniques à couche épaisse présentent une épaisseur de couche de 1 à 50 mm.

16. Procédé selon la revendication 14, où les corps moulés polyoléfiniques à couche épaisse représentent des tuyaux polyoléfiniques ou des géomembranes polyoléfiniques.

17. Utilisation d'un composé de type benzofuran-2-ones pour l'amélioration de la stabilité de polyoléfines qui sont en contact permanent avec des milieux extractifs ; à condition que ces polyoléfines ne soient pas des corps moulés polyoléfiniques obtenus par rotomoulage.
